(19) Europäisches Patentamt
European Patent Office
Office européen des brevets

(11) EP 2 899 216 A1

(12) EUROPEAN PATENT APPLICATION
published in accordance with Art. 153(4) EPC

(43) Date of publication:
**29.07.2015 Bulletin 2015/31**

(21) Application number: **13839367.3**

(22) Date of filing: **18.09.2013**

(51) Int Cl.:
***C08F 8/42*** (2006.01) ***C08F 10/04*** (2006.01)
***C08L 23/26*** (2006.01) ***C09J 123/26*** (2006.01)
***C09K 3/10*** (2006.01)

(86) International application number:
**PCT/JP2013/075165**

(87) International publication number:
**WO 2014/046134 (27.03.2014 Gazette 2014/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.09.2012 JP 2012205009**

(71) Applicant: **Idemitsu Kosan Co., Ltd**
**Tokyo 100-8321 (JP)**

(72) Inventors:
- **YABUKAMI, Minoru**
**Ichihara-shi**
**Chiba 299-0193 (JP)**
- **KANAMARU, Masami**
**Ichihara-shi**
**Chiba 299-0193 (JP)**
- **FUJIMURA, Takenori**
**Ichihara-shi**
**Chiba 299-0193 (JP)**
- **HASHIMA, Kazuhiro**
**Ichihara-shi**
**Chiba 299-0193 (JP)**

(74) Representative: **Vossius & Partner**
**Patentanwälte Rechtsanwälte mbB**
**Siebertstrasse 3**
**81675 München (DE)**

# (54) FUNCTIONALIZED ALPHA-OLEFIN POLYMER, AS WELL AS CURED COMPOSITION AND CURED ARTICLE USING SAME

(57) A functionalized α-olefin polymer having an α-olefin polymer main chain and an alkoxysilyl group and satisfying the following (a) to (d): (a) The meso-pentad fraction [mmmm] is less than 20 mol%, or the meso-diad fraction [m] is less than 95 mol%. (b) The weight-average molecular weight (Mw) is from 1,000 to 500,000. (c) The alkoxysilyl group concentration in all the monomer units is from 0.01 to 50 mol%. (d) The α-olefin polymer is a propylene homopolymer, a 1-butene homopolymer or a propylene-1-butene copolymer.

EP 2 899 216 A1

## Description

### Technical Field

The present invention relates to a functionalized $\alpha$-olefin polymer and to a curable composition and a cured product using it.

### Background Art

Recently, there is growing a rise in the awareness of global environmental issues, and working conditions, safety and health for workers. In that situation, for example, already-existing adhesives have a melting point of 150°C or higher and need heat, and therefore substances capable of realizing low-temperature application are desired.

In use of adhesives, more reactive materials are desired; and in use of reactive adhesives (epoxy resin-based, polyurethane-based, polyamide-based), sealants, sealing materials, adhesives, plasticizers and the like, desired are well-handleable and high-reactive materials and reactivity-controllable materials. From the viewpoint of improving heat resistance and improving waterproofness, needs for olefinic materials are increasing.

For such olefinic materials, PTLs 1 to 3 have tried graphitization through contact of a polyolefin and an alkoxysilane in the presence of an organic peroxide.

### Citation List

### Patent Literature

PTL 1: JP-A 2006-348153
PTL 2: JP-A 4-306202
PTL 3: JP-A 2005-068423

### Summary of Invention

### Technical Problem

However, the olefinic materials disclosed in PTLs 1 to 3 are produced using a substrate having a high melting point, and therefore have some problems in that, when the material is mixed with a curing-accelerating catalyst and then crosslinked with moisture or the like, the material could not be flowable at room temperature and therefore could not be reacted when a solvent is not used, or the resultant cured product would be too hard and is poorly practicable.

The technical problem with the present invention is to provide an olefinic material having flowability at relatively low temperatures and capable of undergoing curing reaction at relatively low temperatures.

### Solution to Problem

Specifically, the present invention provides a functionalized $\alpha$-olefin polymer described below, and a curable composition and a cured product using the polymer.

[1] A functionalized $\alpha$-olefin polymer having an $\alpha$-olefin polymer main chain and an alkoxysilyl group and satisfying the following (a) to (d):

(a) the meso-pentad fraction [mmmm] is less than 20 mol%, or the meso-diad fraction [m] is less than 95 mol%,
(b) the weight-average molecular weight (Mw) is from 1,000 to 500,000,
(c) the alkoxysilyl group concentration in all the monomer units is from 0.01 to 50 mol%, and
(d) the $\alpha$-olefin polymer is a propylene homopolymer, a 1-butene homopolymer or a propylene-1-butene copolymer.

[2] A curable composition containing (A) the functionalized $\alpha$-olefin polymer described in [1] and (B) a curing-accelerating catalyst.
[3] The curable composition according to [2], further containing (C) a tackifier and (D) a diluent.
[4] A cured product produced by curing the curable composition described in [2] or [3].

[5] A method for producing the cured product described in [4], comprising curing the curable composition described in [2] or [3] at a temperature of 100°C or lower.
[6] The curable composition according to [2] or [3] for use for adhesives, sealing agents, pressure-sensitive adhesives or modifiers.

Advantageous Effects of Invention

The functionalized α-olefin polymer and the curable composition of the present invention have good flowability and are excellent in handleability at relatively low temperatures and can be cured at relatively low temperatures.

Description of Embodiments

[Functionalized α-olefinPolymer]

The functionalized α-olefinpolymer of the present invention includes three types of a functionalized propylene homopolymer produced by functionalizing a propylene homopolymer, a functionalized propylene-1-butene copolymer produced by functionalizing a propylene-1-butene copolymer, and a functionalized 1-butene homopolymer produced by functionalizing a 1-butene homopolymer. "Functionalization" in the present description means adding an alkoxysilane to an α-olefin polymer.
The functionalized α-olefin polymer in the present invention is excellent in adhesiveness to polyolefin materials.
Copolymerization with a comonomer such as ethylene or the like may increase the crystalline component to lose flowability at room temperature or to worsen handleability, and therefore the polymer would hardly cure at room temperature and would be difficult to use as a base material for adhesives, pressure-sensitive adhesives or sealing materials.
The functionalized α-olefin polymer of the present invention preferably exhibits flowability at room temperature. Concretely, the functionalized α-olefin polymer of the present invention exhibits flowability at a relatively low temperature of 100°C or lower, and more preferably exhibits flowability at a low temperature of 60°C or lower.

(Meso-pentad Fraction [mmmm])

In the case where the functionalized α-olefin polymer of the present invention is a functionalized propylene homopolymer or a functionalized 1-butene homopolymer, the meso-pentad fraction [mmmm] thereof is less than 20 mol%, preferably from more than 1 mol% to less than 15 mol%, more preferably from more than 1 mol% to less than 10 mol%, even more preferably from more than 1 mol% to less than 5 mol%.
In the case where the functionalized α-olefin polymer of the present invention is a functionalized propylene-1-butene copolymer, the meso-diad fraction [m] thereof is less than 95 mol%, preferably from 30 to 95 mol%, more preferably from 30 to 80 mol%, even more preferably from 30 to 70 mol%. In the case of the functionalized propylene-1-butene copolymer, the structure of the meso-diad fraction [m] can be specified for the reason that the peak of each comonomer does not overlap with each other.
The meso-pentad fraction [mmmm] and the meso-diad fraction [m] can be controlled by the structure of the main catalyst and the polymerization condition.
Controlling the index of stereoregularity, meso-pentad fraction [mmmm] to be less than 20 mol% can be realized by the structure of the main catalyst and the polymerization condition. For example, for controlling by the structure of catalyst, the space where the monomer coordinates with the center metal of the catalyst must be planned to be a suitable size. Depending on the size of the coordination space, monomer insertion would be difficult and the activity of the catalyst would be thereby lowered, and a catalyst having a racemic structure gives a polymer having a high regularity, and the polymer may have a meso-pentad fraction [mmmm] of 20 mol% or more. A catalyst having a meso-structure tends to give a polymer having a low regularity, and the polymer may have a meso-pentad fraction [mmmm] of less than 20 mol%; however, the above-mentioned 2,1-insertion tends to occur, and it is difficult to produce a polymer satisfying a balance of bonding ratio and stereoregularity. For example, using the double-crosslinked catalyst described in this application makes it possible to control the coordination space for the monomer and to produce a polymer satisfying the balance of bonding ratio and stereoregularity.

(Racemic-pentad Fraction [rrrr])

In the case where the functionalized α-olefin polymer of the present invention is a functionalized propylene homopolymer or a functionalized 1-butene homopolymer, the racemic-pentad fraction [rrrr] thereof is preferably less than 20 mol%, more preferably from more than 1 mol% to less than 20 mol%, even more preferably from more than 2

mol% to less than 15 mol%, still more preferably from more than 3 mol% to less than 10 mol%.

In the case where the functionalized α-olefin polymer is a functionalized propylene-1-butene copolymer, the racemic-diad fraction [r] thereof is preferably from 1 to 50 mol%, more preferably from 2 to 45 mol%, even more preferably from 2 to 40 mol%.

Control of the racemic-pentad fraction [rrrr] and the racemic-diad fraction [r] is realized by the main catalyst structure and the polymerization condition, like that of the above-mentioned meso-pentad fraction [mmmm].

The functionalized α-olefin polymer of the present invention preferably has a 2,1-bond fraction of less than 2.0 mol%, more preferably less than 0.5 mol%, even more preferably less than 0.4 mol%, still more preferably less than 0.2 mol%.

Control of the 2,1-bond fraction is realized by controlling the 2,1-bond fraction in the α-olefin polymer to be used as the starting material, according to the method to be mentioned below.

(1,3-Bond Fraction and 1,4-Bond Fraction)

In the functionalized α-olefin polymer of the present invention, the total of the 1,3-bond fraction and the 1,4-bond fraction is preferably less than 0.7 mol%, more preferably less than 0.5 mol%, even more preferably less than 0.4 mol%, still more preferably less than 0.1 mol%.

The above-mentioned "total of 1,3-bond fraction and 1,4-bond fraction" means the 1,3-bond fraction in the case where the functionalized α-olefin polymer of the present invention is a functionalized propylene homopolymer, means the 1,4-bond fraction in the case where the polymer is a functionalized 1-butene homopolymer, and means the total of the 1,3-bond fraction and the 1,4-bond fraction in the case where the polymer is a functionalized propylene-1-butene copolymer.

Control of the 1,3-bond fraction and the 1,4-bond fraction can be realized by controlling the 1,3-bond fraction and the 1,4-bond fraction in the α-olefin polymers to be used as the starting material, according to the method to be mentioned below.

Decrease in the 2,1-bond fraction, the 1,3-bond fraction and the 1,4-bond fraction is preferred as enhancing the reactivity in silane sensitization reaction and radical decomposition reaction to be mentioned below.

In the present invention, the meso-pentad fraction [mmmm], the racemic-pentad fraction [rrrrr], the meso-diad fraction [m], the racemic-diad fraction [r], the 1,3-bond fraction, the 1,4-bond fraction and the 2,1-bond fraction are determined according to the methods reported by Asakura et al. in "Polymer Journal, 16, 717 (1984)", reported by J. Randall et al. in "Macromol. Chem. Phys., C29, 201 (1989)", and reported by V. Busico et al. in "Macromol. Chem. Phys., 198, 1257 (1997)". Briefly, on the $^{13}C$ nuclear magnetic resonance spectrum, the signals for methylene group and methine group are read, and the meso-pentad fraction [mmmm], the racemic-pentad fraction [rrrrr], the meso-diad fraction [m], the racemic-diad fraction [r], the 1,3-bond fraction, the 1,4-bond fraction and the 2,1-bond fraction in the α-olefin polymer chain are thereby determined.

$^{13}C$ NMR spectrometry was carried out using the following device under the following conditions.

Device: $^{13}C$-NMR spectrometer, JNM-EX400 series available from JEOL, Ltd.
Method: proton complete decoupling
Concentration: 230 mg/mL
Solvent: mixed solvent of 1,2,4-trichlorobenzene and deuterated benzene in 90:10 (volume ratio)
Temperature: 130°C
Pulse width: 45°
Pulse repetition time: 4 seconds
Accumulation: 10,000 times

<Case of Functionalized Propylene Homopolymer>

In the case where the functionalized α-olefin polymer of the present invention is a functionalized propylene homopolymer, the above-mentioned 1,3-bond fraction and the 2,1-bond fraction thereof can be calculated according to the following formulae, based on the measured results of the above-mentioned $^{13}C$-NMR spectrometry.

$$\text{1,3-Bond fraction} = (D/2)/(A+B+C+D)\times 100 \text{ (mol\%)}$$
$$\text{2,1-Bond fraction} = [(A+B)/2]/(A+B+C+D)\times 100 \text{ (mol\%)}$$

A: value of integral at 15 to 15.5 ppm
B: value of integral at 17 to 18 ppm
C: value of integral at 19.5 to 22.5 ppm
D: value of integral at 27.6 to 27.8 ppm

<Case of Functionalized 1-Butene Homopolymer>

In the case where the functionalized α-olefin polymer of the present invention is a functionalized 1-butene homopolymer, the 1,4-bond fraction and the 2,1-bond fraction thereof can be calculated according to the following formulae, based on the measured results of the above-mentioned $^{13}C$-NMR spectrometry.

1,4-Bond fraction = E/(A+B+C+D+E)×100 (mol%)
2,1-Bond fraction = {(A+B+D)/3}/(A+B+C+D)×100 (mol%)
A: value of integral at 29.0 to 28.2 ppm
B: value of integral at 35.4 to 34.6 ppm
C: value of integral at 38.3 to 36.5 ppm
D: value of integral at 43.6 to 42.8 ppm
E: value of integral at 31.1 ppm

<Case of Functionalized Propylene-1-Butene Copolymer>

In the case where the functionalized α-olefin polymer of the present invention is a functionalized propylene-1-butene copolymer, the 1,3-bond fraction can be determined in the same manner as that for the above-mentioned functionalized propylene homopolymer, and the 1,4-bond fraction can be determined in the same manner as that for the above-mentioned functionalized 1-butene homopolymer. Further, the 2,1-bond fraction can be the total of the value determined in the same manner as that for the above-mentioned functionalized propylene homopolymer and the value determined in the same manner as that for the above-mentioned functionalized 1-butene homopolymer.

(Melt Endotherm ΔH-D)

Preferably, the melt endotherm ΔH-D, as measured with a differential scanning calorimeter (DSC), of the functionalized α-olefin polymer of the present invention is 10 J/g or less, more preferably 5 J/g or less, even more preferably 1 J/g or less.

When the melt endotherm ΔH-D is 10 J/g or less, then the crystalline content reduces and the flowability at relatively low temperatures enhances, which is favorable from the viewpoint of energy saving in working and of safe environment.

ΔH-D is determined through DSC. Briefly, using a differential scanning calorimeter (DSC-7 available from PerkinElmer. Inc.), 10 mg of a sample is kept in a nitrogen atmosphere at -10°C for 5 minutes, and then heated at 10°C/min. The thus-obtained melt endotherm is ΔH-D.

For controlling the melt endotherm to be 10 J/g or less, the meso-pentad fraction [mmmm] that is the index of stereoregularity is controlled to be 20 mol% or less, and this may be attained by controlling the structure of the main catalyst and the polymerization condition. For example, for controlling by the structure of catalyst, the space where the monomer coordinates with the center metal of the catalyst must be planned to be a suitable size. Depending on the size of the coordination space, monomer insertion would be difficult and the activity of the catalyst would be thereby lowered, and a catalyst having a racemic structure gives a polymer having a high regularity, and the polymer may have a melt endotherm of more than 10 J/g. A catalyst having a meso-structure tends to give a polymer having a low regularity, and the polymer could have a melt endotherm of 10 J/g or less; however, it is difficult to produce a polymer satisfying a balance of bonding ratio and melt endotherm. For example, using the double-crosslinked catalyst described in this application makes it possible to control the coordination space for the monomer and to produce a polymer satisfying the balance of bonding ratio and melt endotherm.

(Weight-Average Molecular Weight (Mw))

From the viewpoint of the flowability and the adhesiveness thereof, the weight-average molecular weight of the functionalized α-olefin polymer of the present invention is preferably from 1,000 to 500,000, more preferably from 2,000 to 100,000, even more preferably from 3,000 to 80,000, still more preferably from 5,000 to 60,000.

(Molecular Weight Distribution (Mw/Mn))

From the viewpoint of the reactivity and the reaction curability thereof, the molecular weight distribution (Mw/Mn) of the functionalized α-olefin polymer of the present invention is preferably 2.3 or less, more preferably 2.0 or less, even more preferably 1.9 or less.

The above-mentioned weight-average molecular weight (Mw) and the number-average molecular weight (Mn)

are polystyrene-equivalent ones measured using the device mentioned below and according to the condition mentioned below. The above-mentioned molecular weight distribution (Mw/Mn) is a value calculated from the weight-average molecular weight (Mw) and the number-average molecular weight (Mn).

GPC Measurement Device

Column: TOSO GMHHR-H(S)HT
Detector: RI detector for liquid chromatography, Waters 150C

Measurement Conditions

Solvent: 1,2,4-trichlorobenzene
Measurement temperature: 145°C
Flow rate: 1.0 mL/minute
Sample concentration: 2.2 mg/mL
Injection amount: 160 μL
Calibration curve: Universal Calibration
Analysis software: HT-GPC (ver. 1.0)

(B Viscosity)

From the viewpoint of the reactivity and the workability at room temperature thereof, the functionalized α-olefin polymer of the present invention preferably has a B viscosity (flowability) at 30°C of 5000 mPa·s or less, more preferably 2000 mPa·s or less.
Here, the B viscosity is measured according to ASTM-D19860-91.

(Alkoxysilyl Group Concentration)

In the functionalized α-olefin polymer of the present invention, the alkoxysilyl group concentration in all the monomer units is from 0.01 to 50 mol%, and preferably the ratio is from 0.01 to 35 mol%, more preferably from 0.02 to 30 mol%, even more preferably from 0.02 to 20 mol%, still more preferably from 0.05 to 2 mol%.
In the functionalized α-olefin polymer of the present invention, when the alkoxysilyl group concentration in all the monomer units is less than 0.01 mol%, then the polymer would lose crosslinkability and therefore, even though a curing accelerator or the like to be mentioned below is added thereto, the polymer could not form a cured product; while on the other hand, when the ratio is more than 50 mol%, then the polymer would be crosslinked excessively and therefore the resultant cured product would be a hard one that is difficult to handle, and in addition, the cured product could not exhibit the intended adhesive performance and pressure-sensitive adhesive performance, and is unfavorable.
In the case where the functionalized α-olefin polymer in which the alkoxysilyl group concentration falls within the above-mentioned range is used to provide a curable composition, the crosslinking rate of the composition is suitably high since the alkoxysilyl group concentration therein is high, and the strength of the cured product produced after curing is high and, in addition, the adhesiveness thereof to glass is improved.
The alkoxysilyl group concentration in all the monomer units may be determined according to the measurement method mentioned below.
The alkoxysilyl group concentration is calculated from the concentration of the peak derived from the hydrogen atom on the carbon atom adjacent to the oxygen atom of the alkoxysilyl group appearing at around from 3.7 to 4.1 ppm in 1H-NMR.

Hydrogen on the carbon atom adjacent to the oxygen atom of the alkoxysilyl group (i): value of integral at 3.7 to 4.1 ppm
All propylene units -($CH_2CH(Me)$)- (ii): total values of integral of peaks appearing at 0.7 to 1.7 ppm
All butene units -($CH_2CH(Et)$) (iii): value of integral of peak appearing at 0.7 to 1.7 ppm

$$\text{Alkoxysilyl group concentration in all monomer units} = [[(i)/6]/\{(ii)/6+(iii)/8\}]\times 100\ (\text{mol\%})$$

(Number of Alkoxysilyl Groups per Molecule)

In the functionalized α-olefin polymer of the present invention, the number of the alkoxysilyl group per molecule is preferably from 0.4 to 10, more preferably from 0.5 to 10, even more preferably from 1.8 to 6.0, still more preferably from 2.0 to 4.5.

The number of the alkoxysilyl groups per molecule can be calculated from the above-mentioned number-average molecular weight (Mn), the alkoxysilyl group concentration in all the monomer units, the propylene unit ratio and the 1-butene unit ratio, according to the following formula.

$$\text{Average molecular weight of monomer unit (M)} = (\text{propylene unit ratio} \times 42.08) + (\text{1-butene unit ratio} \times 56.11)$$

$$\text{Number of alkoxysilyl groups per molecule} = (\text{Mn}/\text{M}) \times (\text{alkoxysilyl group concentration in all monomer units})/100$$

From the viewpoint of the reactivity and the workability at room temperature thereof, preferably, the functionalized α-olefin polymer of the present invention does not have a melting point. "Not having a melting point" means that the melting peak is less than 1.0 J/g, or may be indicated by the flowability (B viscosity) at 30°C.

Production of the functionalized α-olefin polymer not having a melting point may be realized by controlling the structure of the main catalyst, the species of the monomer and the polymerization condition.

Here, the B viscosity is measured according to ASTM-D19860-91.

The melting peak is determined through DSC measurement. Briefly, using a differential scanning calorimeter (DSC-7 available from PerkinElmer, Inc.), 10 mg of a sample is kept in a nitrogen atmosphere at -10°C for 5 minutes, and then heated at 10°C/min, to thereby obtain a melt endotherm.

The functionalized α-olefin polymer of the present invention may be produced, for example, by reacting an α-olefin polymer, a radical initiator and a monomer having an alkoxysilyl group and an ethylenic unsaturated group (hereinafter this may be abbreviated as a silane-modified monomer).

(α-Olefin Polymer)

The α-olefin polymer may be produced, for example, using a metallocene catalyst comprising a combination of the following components (A), (B) and (C) and using hydrogen as a molecular weight regulator. Concretely, the polymer may be produced according to the method disclosed in WO2008/047860.

(A) A transition metal compound having a cyclopentadienyl group, a substituted cyclopentadienyl group, an indenyl group or a substituted indenyl group and containing a metal element of Group 3 to Group 10 of the Periodic Table.
(B) A compound capable of reacting with a transition metal compound to form an ionic complex.
(C) An organic aluminium compound.

The transition metal compound of the component (A), which has a cyclopentadienyl group, a substituted cyclopentadienyl group, an indenyl group or a substituted indenyl group and contains a metal element of Groups 3 to 10 of the Periodic Table, includes a di-crosslinked complex represented by the following general formula (I):

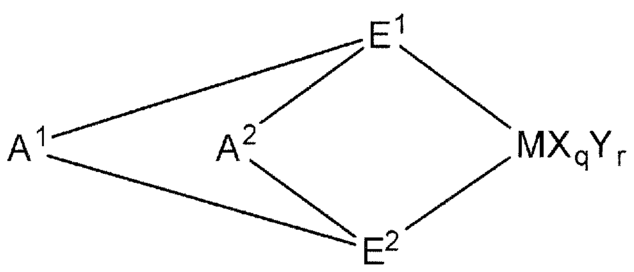

(I)

In the general formula (I), M represents a metal element of Groups 3 to 10 of the Periodic Table, and specific

examples thereof include titanium, zirconium, hafnium, yttrium, vanadium, chromium, manganese, nickel, cobalt, palladium and lanthanoid metals, etc. Of those, from the viewpoint of olefin polymerization activity, preferred are titanium, zirconium and hafnium, and from the viewpoint of α-olefin polymer yield and catalyst activity, most preferred is zirconium.

$E^1$ and $E^2$ each represent a ligand selected from a substituted cyclopentadienyl group, an indenyl group, a substituted indenyl group, a heterocyclopentadienyl group, a substituted heterocyclopentadienyl group, an amide group (-N<), a phosphine group (-P<), a hydrocarbon group [>CR-, >C<] and a silicon-containing group [>SiR-, >Si<] (wherein R represents hydrogen or a hydrocarbon group having from 1 to 20 carbon atoms or a hetero atom-containing group), forming a crosslinked structure through $A^1$ and $A^2$. $E^1$ and $E^2$ may be the same as or different from each other. As these $E^1$ and $E^2$, preferred are a cyclopentadienyl group, a substituted cyclopentadienyl group, an indenyl group and a substituted indenyl group, and at least one of $E^1$ and $E^2$ is a cyclopentadienyl group, a substituted cyclopentadienyl group, an indenyl group or a substituted indenyl group.

The substituent of the substituted cyclopentadienyl group, the substituted indenyl group and the substituted heterocyclopentadienyl group includes a hydrocarbon group having from 1 to 20 carbon atoms (preferably having from 1 to 10 carbon atoms, more preferably from 1 to 6 carbon atoms), a silicon-containing group or a hetero atom-containing group.

X represents a σ-bonding ligand, and in the case where plural "X"s are present, plural "X"s may be the same as or different from each other and may be crosslinked with any other X, $E^1$, $E^2$, or Y. Specific examples of X include a halogen atom, a hydrocarbon group having from 1 to 20 carbon atoms, an alkoxy group having from 1 to 20 carbon atoms, an aryloxy group having from 6 to 20 carbon atoms, an amide group having from 1 to 20 carbon atoms, a silicon-containing group having from 1 to 20 carbon atoms, a phosphide group having from 1 to 20 carbon atoms, a sulfide group having from 1 to 20 carbon atoms, an acyl group having from 1 to 20 carbon atoms, etc.

The halogen atom includes a chlorine atom, a fluorine atom, a bromine atom, an iodine atom.

The hydrocarbon group having from 1 to 20 carbon atoms concretely includes an alkyl group such as a methyl group, an ethyl group, a propyl group, a butyl group, a hexyl group, a cyclohexyl group, an octyl group, etc.; an alkenyl group such as a vinyl group, a propenyl group, a cyclohexenyl group, etc.; an arylalkyl group such as a benzyl group, a phenylethyl group, a phenylpropyl group, etc.; an aryl group such as a phenyl group, a tolyl group, a dimethylphenyl group, a trimethylphenyl group, an ethylphenyl group, a propylphenyl group, a biphenyl group, a naphthyl group, a methylnaphthyl group, an anthracenyl group, a phenanthryl group, etc. Above all, preferred are an alkyl group such as a methyl group, an ethyl group, a propyl group, etc.; an aryl group such as a phenyl group, etc.

The alkoxy group having from 1 to 20 carbon atoms includes an alkoxy group such as a methoxy group, an ethoxy group, a propoxy group, a butoxy group, etc.; a phenylmethoxy group, a phenylethoxy group, etc.

The aryloxy group having from 6 to 20 carbon atoms includes a phenoxy group, a methylphenoxy group, a dimethylphenoxy group, etc. The amide group having from 1 to 20 carbon atoms includes an alkylamide group such as a dimethylamide group, a diethylamide group, a dipropylamide group, a dibutylamide group, a dicyclohexylamide group, a methylethylamide group, etc.; an alkenylamide group such as a divinylamide group, a dipropenylamide group, a dicyclohexenylamide group, etc.; an arylalkylamide group such as a dibenzylamide group, a phenylethylamide group, a phenylpropylamide group, etc.; an arylamide group such as a diphenylamide group, a dinaphthylamide group, etc.

The silicon-containing group having from 1 to 20 carbon atoms includes a mono-hydrocarbon-substituted silyl group such as a methylsilyl group, a phenylsilyl group, etc.; a di-hydrocarbon-substituted silyl group such as a dimethylsilyl group, a diphenylsilyl group, etc.; a tri-hydrocarbon-substituted silyl group such as a trimethylsilyl group, a triethylsilyl group, a tripropylsilyl group, a tricyclohexylsilyl group, a triphenylsilyl group, a dimethylphenylsilyl group, a methyldiphenylsilyl group, a tritolylsilyl group, a trinaphthylsilyl group, etc.; a hydrocarbon-substituted silyl ether group such as a trimethylsilyl ether group, etc.; a silicon-substituted alkyl group such as a trimethylsilylmethyl group, etc.; a silicon-substituted aryl group such as a trimethylsilylphenyl group, etc. Above all, preferred are a trimethylsilylmethyl group, a phenyldimeth5-lsilylethyl group, etc.

The phosphide group having from 1 to 20 carbon atoms includes an alkyl phosphide group such as a dimethyl phosphide group, a diethyl phosphide group, a dipropyl phosphide group, a dibutyl phosphide group, a dihexyl phosphide group, a dicyclohexyl phosphide group, a dioctyl phosphide group, etc. ; an alkenyl phosphide group such as a divinyl phosphide group, a dipropenyl phosphide group, a dicyclohexenyl phosphide group, etc.; an arylalkyl phosphide group such as a dibenzyl phosphide group, a phenylethyl phosphide group, a phenylpropyl phosphide group, etc.; an aryl phosphide group such as a diphenyl phosphide group, a ditolyl phosphide group, a bis(dimethylphenyl) phosphide group, a bis(trimethylphenyl) phosphide group, a bis(ethylphenyl) phosphide group, a bis(propylphenyl) phosphide group, a bis(biphenyl) phosphide group, a dinaphthyl phosphide group, a bis(methylnaphthyl) phosphide group, a dianthracenyl phosphide group, a diphenanthryl phosphide group, etc.

The sulfide group having from 1 to 20 carbon atoms includes an alkyl sulfide group such as a methyl sulfide group, an ethyl sulfide group, a propyl sulfide group, a butyl sulfide group, a hexyl sulfide group, a cyclohexyl sulfide group, an octyl sulfide group, etc.; an alkenyl sulfide group such as a vinyl sulfide group, a propenyl sulfide group, a cyclohexenyl sulfide group, etc.; an arylalkyl sulfide group such as a benzyl sulfide group, a phenylethyl sulfide group,

a phenylpropyl sulfide group, etc.; an aryl sulfide group such as a phenyl sulfide group, a tolyl sulfide group, a dimethylphenyl sulfide group, a trimethylphenyl sulfide group, an ethylphenyl sulfide group, a propylphenyl sulfide group, a biphenyl sulfide group, a naphthyl sulfide group, a methylnaphthyl sulfide group, an anthracenyl sulfide group, a phenanthryl sulfide group, etc.

The acyl group having from 1 to 20 carbon atoms includes a formyl group; an alkylacyl group such as an acetyl group, a propionyl group, a butyryl group, a valeryl group, a palmitoyl group, a stearoyl group, an oleoyl group, etc.; an arylacyl group such as a benzoyl group, a toluoyl group, a salicyloyl group, a cinnamoyl group, a naphthoyl group, a phthaloyl group, etc.; an oxalyl group, a malonyl group and a succinyl group, which are derived from oxalic acid, malonic acid and succinic acid being dicarboxylic acid, respectively, etc.

On the other hand, Y represents a Lewis base, and in the case where plural "Y"s are present, plural "Y"s may be the same as or different from each other and may be crosslinked with any other Y, $E^1$, $E^2$, or X. Specific examples of the Lewis base for Y include amines, ethers, phosphines, thioethers, etc. The amines include amines having from 1 to 20 carbon atoms, concretely including alkylamines such as methylamine, ethylamine, propylamine, butylamine, cyclohexylamine, methylethylamine, dimethylamine, diethylamine, dipropylamine, dibutylamine, dicyclohexylamine, methylethylamine, etc.; alkenylamines such as vinylamine, propenylamine, cyclohexenylamine, divinylamine, dipropenylamine, dicyclohexenylamine, etc.; arylalkylamines such as phenylamine, phenylethylamine, phenylpropylamine, etc.; arylamines such as diphenylamine, dinaphthylamine, etc.

The ethers include aliphatic monoether compounds such as methyl ether, ethyl ether, propyl ether, isopropyl ether, butyl ether, isobutyl ether, n-amyl ether, isoamyl ether, etc.; aliphatic mixed ether compounds such as methylethyl ether, methylpropyl ether, methylisopropyl ether, methyl-n-amyl ether, methylisoamyl ether, ethylpropyl ether, ethylisopropyl ether, ethylbutyl ether, ethylisobutyl ether, ethyl-n-amyl ether, ethylisoamyl ether, etc.; aliphatic unsaturated ether compounds such as vinyl ether, allyl ether, methylvinyl ether, methylallyl ether, ethylvinyl ether, ethylallyl ether, etc.; aromatic ether compounds such as anisole, phenetole, phenyl ether, benzyl ether, phenylbenzyl ether, $\alpha$-naphthyl ether, $\beta$-naphthyl ether, etc.; cyclic ether compounds such as ethylene oxide, propylene oxide, trimethylene oxide, tetrahydrofuran, tetrahydropyran, dioxane, etc.

The phosphines include phosphines having from 1. to 20 carbon atoms. Concretely, there are mentioned alkyl phosphines, e.g., monohydrocarbon-substituted phosphines such as methyl phosphine, ethyl phosphine, propyl phosphine, butyl phosphine, hexyl phosphine, cyclohexyl phosphine, octyl phosphine, etc.; dihydropcarbon-substituted phosphines such as dimethyl phosphine, diethyl phosphine, dipropyl phosphine, dibutyl phosphine, dihexyl phosphine, dicyclohexyl phosphine, dioctyl phosphine, etc.; trihydrocarbon-subst-ituted phosphines such as trimethyl phosphine, triethyl phosphine, tripropyl phosphine, tributyl phosphine, trihexyl phosphine, tricyclohexyl phosphine, trioctyl phosphine, etc.; monoalkenyl phosphines such as vinyl phosphine, propenyl phosphine, cyclohexenyl phosphine, etc., dialkenyl phosphines in which two hydrogen atoms of phosphine are substituted with alkenyl groups; trialkenyl phosphines in which three hydrogen atoms of phosphine are substituted with alkenyl groups; arylphosphines, e.g., arylalkyl phosphines such as benzyl phosphine, phenylethyl phosphine, phenylpropyl phosphine, etc.; diarylalkyl phosphines or aryldialkyl phosphines in which three hydrogen atoms of phosphine are substituted with any of aryl or alkenyl groups; phenyl phosphine, tolyl phosphine, dimethylphenyl phosphine, trimethylphenyl phosphine, ethylphenyl phosphine, propylphenyl phosphine, biphenyl phosphine, naphthyl phosphine, methylnaphthyl phosphine, anthracenyl phosphine, phenanthryl phosphine, di(alkylaryl) phosphines in which two hydrogen atoms of phosphine are substituted with alkylaryl groups, tri(alkylaryl)phosphines in which three hydrogen atoms of phosphine are substituted with alkylaryl groups, etc. The thioethers include the above-mentioned sulfides.

Next, $A^1$ and $A^2$ are each a divalent crosslinking group bonding two ligands and each represent a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $*-BR^1-$, or $-AlR^1-$, wherein $R^1$ represents a hydrogen atom, a halogen atom, a hydrocarbon group having from 1 to 20 carbon atoms, or a halogen-containing hydrocarbon group having from 1 to 20 carbon atoms, and $A^1$ and $A^2$ may be the same as or different from each other. q represents an integer of from 1 to 5, i.e., [(atomic valence of M) . 2]; and r represents an integer of from 0 to 3.

Of those crosslinking groups, preferably, at least one is a crosslinking group comprising a hydrocarbon group with 1 or more carbon atoms, or a silicon-containing group. The crosslinking group of the type includes, for example, those represented by the following general formula (a), and specific examples thereof include a methylene group, an ethylene group, an isopropylene group, a tetramethylethylene group, a 1,2-cyclohexylene group, a dimethylsilylene group, a diphenylsilylene group, a methylphenylsilylene group, a dimethylgermylene group, a dimethylstannylene group, a tetramethyldisilylene group, a diphenyldisilylene group, etc. Of those, preferred are an ethylene group, an isopropylene group, a dimethylsilylene group, and a tetramethyldisilylene group.

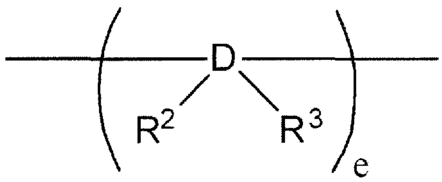

(a)

wherein D represents an element of Group 14 of the Periodic Table, including, for example, carbon, silicon, germanium and tin. $R^2$ and $R^3$ each represent a hydrogen atom, or a hydrocarbon group having from 1 to 20 carbon atoms, and these may be the same as or different from each other, or may bond to each other to form a cyclic structure. e represents an integer of from 1 to 4.

As specific examples of the transition metal compound represented by the general formula (I), there are mentioned the specific examples described in WO2008/066168. The compounds may also be analogous compounds containing a metal element of any other Group. Preferred are compounds containing a transition metal of Group 4 of the Periodic Table, and more preferred are zirconium compounds.

Of the transition metal compounds represented by the general formula (I), preferred are the compounds represented by the following general formula (II):

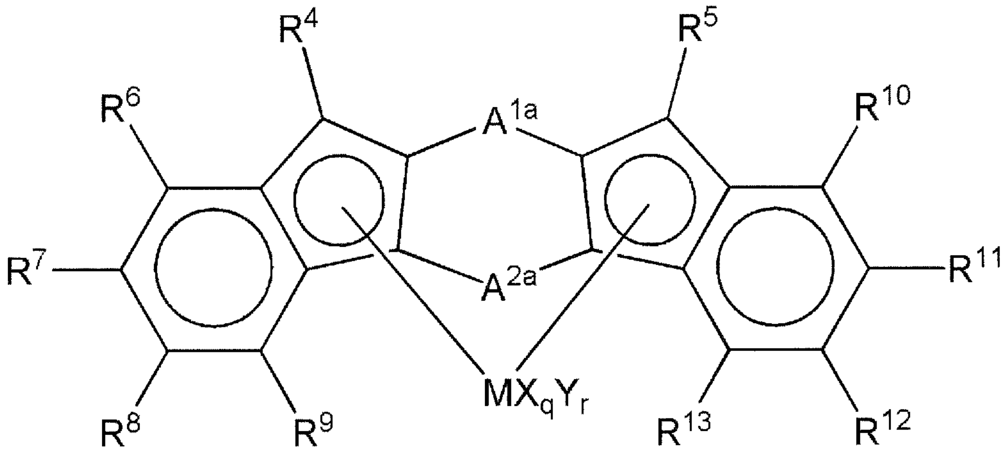

(II)

In the general formula (II), M represents a metal element of Groups 3 to 10 of the Periodic Table, $A^{1a}$ and $A^{2a}$ each represents a crosslinking group represented by the general formula (a) in the general formula (I), and is preferably $CH_2$, $CH_2CH_2$, $(CH_3)_2C$. $(CH_3)_2C(CH_3)_2C$, $(CH_3)_2Si$ or $(C_6H_5)_2Si$, $(CH_3)_2Si(CH_3)_2Si$. $A^{1a}$ and $A^{2a}$ may be the same as or different from each other. $R^4$ to $R^{13}$ each represent a hydrogen atom, a halogen atom, a hydrocarbon group having from 1 to 20 carbon atoms, a halogen-containing hydrocarbon group having from 1 to 20 carbon atoms, a silicon-containing group or a hetero atom-containing group. The halogen atom, the hydrocarbon group having from 1 to 20 carbon atoms and the silicon-containing group include the same ones as those described in the general formula (I). The halogen-containing hydrocarbon group having from 1 to 20 carbon atoms includes a p-fluorophenyl group, a 3,5-difluorophenyl group, a 3,4,5-trifluorophenyl group, a pentafluorophenyl group, a 3,5-bis(trifluoro)phenyl group, a fluorobutyl group, etc. The hetero atom-containing group includes a hetero atom-containing group having from 1 to 20 carbon atoms, concretely including a nitrogen-containing group such as a dimethylamino group, a diethylamino group, a diphenylamino group, etc.; a sulfur-containing group such as a phenyl sulfide group, a methyl sulfide group, etc.; a phosphorus-containing group such as a dimethyl phosphino group, a diphenyl phosphino group, etc.; an oxygen-containing group such as a methoxy group, an ethoxy group a phenoxy group, etc. Above all, as $R^4$ and $R^5$, preferred are halogen atom, a group containing a hetero atom such as oxygen, silicon or the like, and a hydrocarbon group having from 1 to 20 carbon atoms in terms of providing high polymerization activity. As $R^6$ to $R^{13}$, preferred are a hydrogen atom, and a hydrocarbon group having from 1 to 20 carbon atoms. X and Y are the same as in the general formula (I). q represents a integer of from 1 to 5, [(valence of M) - 2], and r represents an integer of from 0 to 3.

Of the transition metal compounds represented by the general formula (II) in which the two indenyl groups are the same, specific examples of the transition metal compound with a metal of Group 4 of the Periodic Table are described in WO2008/066168. The compounds may also be analogous compounds containing a metal element of any other Group than Group 4. Preferred are transition metal compounds with a metal of Group 4 of the Periodic Table, and more preferred are zirconium compounds.

On the other hand, of the transition metal compounds represented by the general formula (II) in which $R^5$ is a

hydrogen atom and $R^4$ is not a hydrogen atom, specific examples of the transition metal compound with a metal of Group 4 of the Periodic Table are described in WO2008/066168. The compounds may also be analogous compounds containing a metal element of any other Group than Group 4. Preferred are transition metal compounds with a metal of Group 4 of the Periodic Table, and more preferred are zirconium compounds.

The compound (B) capable of reacting with a transition metal compound to form an ionic complex, which constitutes the catalyst for use in the present invention, is preferably a borate compound from the viewpoint of the ability thereof to give a high-purity terminal-unsaturated olefinic polymer having a relatively low molecular weight and realizing a high catalyst activity. Specific examples of the borate compound are described in WO2008/066168. One alone or two or more of these may be used here either singly or as combined. In a case where the molar ratio of hydrogen to the transition metal compound to be mentioned below (hydrogen/transition metal compound) is 0, preferred are tetrakispentafluorophenyl borate, dimethylanilinium tetrakis(pentafluorophenyl)borate, triphenylcarbenium tetrakis(pentafluorophenyl)borate and methylanilinium tetrakis(perfluorophenyl)borate.

The catalyst to be used in the production method for the α-olefin polymer may be a combination of the above-mentioned component (A) and component (B), and may optionally contain, as the component (C), an organic aluminium compound in addition to the component (A) and the component (B).

The organic aluminium compound of the component (C) includes trimethylaluminium, triethylaluminium, triisopropylaluminium, triisobutylaluminium, tri-normal-hexylaluminium, tri-normal-octylaluminium, dimethylaluminium chloride, diethylaluminium chloride, methylaluminium dichloride, ethylaluminium dichloride, dimethylaluminium fluoride, diisobutylaluminium hydride, diethylaluminium hydride, ethylaluminium sesqui-chloride, etc. One alone or two or more of these organic aluminium compounds may be used here either singly or as combined.

Of those, preferred are trialkylaluminiums such as trimethylaluminium, triethylaluminium, triisopropylaluminium, triisobutylaluminium, tri-normal-hexylaluminium, tri-normal-octylaluminium, etc.; and more preferred are triisobutylaluminium, tri-normal-hexylaluminium and tri-normal-octylaluminium.

The amount of the component (A) to be used is generally from $0.1 \times 10^{-6}$ to $1.5 \times 10^{-5}$ mol/L, preferably from $0.15 \times 10^{-6}$ to $1.3 \times 10^{-5}$ mol/L, more preferably from $0.2 \times 10^{-6}$ to $1.2 \times 10^{-5}$ mol/L, even more preferably from $0.3 \times 10^{-6}$ to $1.0 \times 10^{-5}$) mol/L. When the amount of the component (A) is $0.1 \times 10^{-6}$ mol/L or more, then the catalyst can sufficiently express the activity, and when it is $1.5 \times 10^{-5}$ mol/L or less, then the polymerization heat is easily removed.

The molar ratio of the component (A) to the component (B) to be used, (A)/(B), is preferably from 10/1 to 1/100, more preferably from 2/1 to 1/10. When (A)/(B) falls within the range of from 10/1 to 1/100, the catalyst exhibits the effect thereof and, in addition, the catalyst cost per unit mass polymer can be reduced. Further, there are few risks of existence of much boron in the intended α-olefin polymer.

The molar ratio of the component (A) to the component (C) to be used, (A)/(C), is preferably from 1/1 to 1/10000, more preferably from 1/5 to 1/2000, even more preferably from 1/10 to 1/1000. The use of component (C) may improve the polymerization activity per the transition metal. When (A)/(C) falls within the range of from 1/1 to 1/10000, the balance of the addition effect of the component (C) and the economic efficiency is good and, in addition, there are few risks of existence of much aluminium in the intended α-olefin polymer.

In the production method for the α-olefin polymer, the component (A) and the component (B), or the component (A), the component (B) and the component (C) may be subjected to preparatory contact. The preparatory contact can be attained, for example, by bringing the component (B) into contact with the component (A), but the method is not specifically defined, and any known method may be employed. Such preparatory contact is effective for improving the catalyst activity and for reduction of the catalyst cost, for example, by reduction of the content ratio of the promoter, the component (B).

The α-olefin polymer may also be a terminal-unsaturated α-olefin polymer produced by subjecting a starting material, the α-olefin polymer obtained according to the above-mentioned production method to additional thermal decomposition.

The thermal decomposition may be attained by heating the starting material, α-olefin polymer obtained according to the above-mentioned production method.

The heating temperature may be adjusted by setting the intended molecular weight and in consideration of the results of preparatory experiments. Preferably, the temperature is from 300 to 400°C, more preferably from 310 to 390°C. When the heating temperature is lower than 300°C, then the thermal decomposition would not go on. On the other hand, when the heating temperature is higher than 400°C, the resultant terminal-unsaturated α-olefin polymer would degrade.

The thermal decomposition time (heat treatment time) is preferably from 30 minutes to 10 hours, more preferably from 60 to 240 minutes. When the thermal decomposition time is shorter than 30 minutes, the produced amount of the terminal-unsaturated α-olefin polymer may be small. On the other hand, when the thermal decomposition time is longer than 10 hours, the resultant terminal-unsaturated α-olefin polymer would degrade.

The thermal decomposition may be carried out as follows, for example, using a stainless or the like reactor equipped with a stirrer, as a thermal decomposition device. The container is charged with an inert gas such as nitrogen, argon or the like, and the starting material, α-olefin polymer is put therein and heated and melted therein. The resultant

molten polymer phase is bubbled with an inert gas so that the volatile product is taken out, and heated at a predetermined temperature for a predetermined period of time.

The radical decomposition may be performed by adding from 0.05 to 2.0% by mass of an organic peroxide relative to the starting material, α-olefin polymer at a temperature of from 160 to 300°C.

The decomposition temperature is preferably 170 to 290°C, more preferably from 180 to 280°C. When the decomposition temperature is lower than 160°C, the decomposition reaction would not go on. On the other hand, when the decomposition temperature is higher than 300°C, then the decomposition would go on too vigorously, and would therefore finish before the organic peroxide could be sufficiently and uniformly diffused in the molten polymer by stirring, and the yield would thereby lower.

The organic peroxide to be added is preferably an organic peroxide having a one-minute half-life temperature of from 140 to 270°C. Specific examples of the organic peroxide include the following compounds: diisobutyryl peroxide, cumylperoxy neodecanoate, di-n-propylperoxy dicarbonate, diisopropylperoxy dicarbonate, di-sec-butylperoxy dicarbonate, 1,1,3,3-tetramethylbutylperoxy neodecanoate, di(4-t-butylcyclohexyl)peroxy dicarbonate, di(2-ethylhexyl)peroxy dicarbonate, t-hexylperoxy neodecanoate, t-butylperoxy neoheptanoate, t-hexylperoxy pivalate, t-butylperoxy pivalate, di(3,5,5-trimethylhexanoyl) peroxide, dilauryl peroxide, 1,1,3,3-tetramethylbutylperoxy-2-ehtylhexanoate, 2,5-dimethyl-2,5-di(2-ethylhexanoylperoxy)hexane, t-hexylperoxy-2-ethylhexanoate, di(4-methylbenzoyl) peroxide, t-butylperoxy-2-ehtylhexanoate, di(3-methylbenzoyl) peroxide, dibenzoyl peroxide, 1,1-di(t-butylperoxy)-2-methylcyclohexane, 1,1-di(t-hexylpropylperoxy)-3,3,5-trimethylcyclohexane, 1,1-di(t-hexylperoxy)cyclohexane, 1,1-di(t-butylperoxy)cyclohexane, 2,2-di(4.4-di(t-butylperoxy)cyclohexyl)propane, t-hexylperoxyisopropyl monocarbonate, t-butylperoxy maleate, t-butylperoxy-3,5,5-trimethylhexanoate, t-butylperoxy laurate, t-butylperoxyisopropyl monocarbonate, t-butylperoxy-2-ethylhexyl monocarbonate, t-hexylperoxy benzoate, 3,5-dimethyl-2,5-di(benzoylperoxy)hexane, t-butylperoxy acetate, 2,2-di(t-butylperoxy)butane, t-butylperoxy benzoate, n-butyl 4,4-di(t-butylperoxy)valerate, di(2-t-butylperoxyisopropyl) benzoate, dicumyl peroxide, di-t-hexyl peroxide, 2,5-dimethyl-2,5-di(t-butylperoxy)hexane, t-butylcumyl peroxide, di-t-butyl peroxide, p-Menthans hydroperoxide, 2,5-dimethyl-2,5-di(t-butylperoxy)hexyne-3, diisopropylbenzene hydroperoxide, 1,1,3,3-tetramethylbutyl hydroperoxide, cumene hydroperoxide, t-butyl hydroperoxide.

The amount of the organic peroxide to be added is preferably from 0.1 to 1.8% by mass relative to the starting material, α-olefin polymer, more preferably from 0.2 to 1.7% by mass. When the amount added is less than 0.05% by mass, then the decomposition rate would be low and the production efficiency would be poor. On the other hand, when the amount added is more than 2.0% by mass, the odor caused by decomposition of the organic peroxide would be problematic.

The time of the decomposition reaction is, for example, from 30 seconds to 10 hours, preferably from 1 minute to 1 hour. When the decomposition time is shorter than 30 seconds, then the decomposition could not go on sufficiently and, in addition, a large amount of the undecomposed organic peroxide would remain. On the other hand, when the decomposition time is longer than 10 hours, then there would be a risk of occurrence of crosslinking reaction being side reaction and the resultant α-olefin polymer would yellow.

The radical decomposition may be attained according to any method of, for example, decomposition in a batch process or decomposition in a continuous melting process.

A case of radical decomposition according to a batch process is described. A stainless or the like reactor equipped with a stirrer is charged with an inert gas such as nitrogen, argon or the like, and a starting material, α-olefin polymer is put therein, and heated and melted. An organic peroxide is added dropwise to the molten material, α-olefin polymer, and heated at a predetermined temperature for a predetermined period of time.

It is desirable that the organic peroxide is added dropwise for a period of time falling within the range of the above-mentioned decomposition time, and the addition mode may be any of continuous dropwise addition or intermittent dropwise addition. Also preferably, the reaction time after the end of the dropwise addition falls within the range of the above-mentioned reaction time.

The organic peroxide may be dissolved in a solvent and the resultant solution may be dropwise added.

The solvent is preferably a hydrocarbon solvent, and specific examples thereof include aliphatic hydrocarbons such as heptane, octane, decane, dodecane, tetradecane, hexadecane, nonadecane, etc.; alicyclic hydrocarbons such as methylcyclopentane, cyclohexane, methylcyclohexane, cycloctane, cyclododecane, etc.; aromatic hydrocarbons such as benzene, toluene, xylene, ethylbenzene, trimethylbenzene, etc. Of those solvents, preferred are the solvents having a boiling point of 100°C or higher.

In decomposition, the starting material, α-olefin polymer may be dissolved in a solvent. The decomposition temperature in the case where the starting material, α-olefin polymer is dissolved in a solvent is generally within a range of from 100 to 250°C, preferably within a range of from 120 to 200°C.

In the case where the radical decomposition is attained according to a continuous melting process, the reaction time in terms of the mean residence time is, for example, from 20 seconds to 10 minutes. As compared with a batch process, the continuous melting process can better the mixed state and can shorten the reaction time.

As the apparatus, usable is a single-screw or twin-screw melt extruder. Preferred is an extruder having an L/D

of 10 or more, which has an injection port in the middle of the barrel and is capable of degassing under reduced pressure.

For the radical decomposition according to a continuous melting process, using the above-mentioned apparatus, a method where an organic peroxide is infiltrated into the starting material, α-olefin polymer, or a method where the starting material, α-olefin polymer and an organic peroxide are separately supplied and mixed is applicable.

For infiltration of an organic peroxide into the starting material, α-olefin polymer, concretely, a predetermined amount of an organic peroxide is added to a predetermined amount of the starting material, α-olefin polymer in the presence of an inert gas such as nitrogen or the like, and stirred at a temperature range of from room temperature to 40°C, whereby the organic peroxide is uniformly absorbed by and infiltrated in the starting material pellets. The resultant, organic peroxide-infiltrated starting material, α-olefin polymer (infiltrated pellets) is decomposed through melt extrusion, or the infiltrated pellets are, as a master batch, added to the starting material, α-olefin polymer to decompose the polymer, thereby giving a terminal-unsaturated α-olefin polymer.

In the case where the organic peroxide is a solid, or the organic peroxide is poorly soluble in the starting material, α-olefin polymer, it is recommended that the organic peroxide is previously dissolved in a hydrocarbon solvent to prepare a solution, and the resultant solution is absorbed by and infiltrated in the starting material, α-olefin polymer.

In the case of separate supply of the starting material, α-olefin polymer and an organic peroxide followed by mixing them, the starting material, α-olefin polymer and an organic peroxide are supplied each at a predetermined flow rate in the hopper section of an extruder, or an organic peroxided is supplied in the middle of the barrel at a predetermined flow rate.

(Radical Initiator)

The radical initiator is not specifically defined, and may be suitably selected from any already-existing known radical initiators, for example, various types of organic peroxides, as well as azo compounds such as azobisisobutyronitrile, azobisisovaleronitrile, etc. Of those, preferred are organic peroxides.

The organic peroxides usable as the radical initiator include, for example, diacyl peroxides such as dibenzoyl peroxide, di-3,5,5-trimethylhexanoyl peroxide, dilauroyl peroxide, didecanoyl peroxide, di(2.4-dichlorobenzoyl) peroxide, etc.; hydroperoxides such as t-butyl hydroperoxide, cumene hydroperoxide, diisopropylbenzene hydroperoxide, 2,5-dimethylhexane-2,5-dihydroperoxide, etc.; dialkyl peroxides such as di-t-butyl peroxide, dicumyl peroxide, 2,5-dimethyl-2,5-di(t-butylperoxy)hexane, 2,5-dimethyl-2,5-di(t-butylperoxy)hexyne-3, α,α'-bis(t-butylperoxy)diisopropylbenzene, etc.; peroxyketals such as 1,1-bis-t-butylperoxy-3,3,5-trimethylcyclohexane, 2,2-bis(t-butylperoxy)butane, etc.; alkyl peresters such as t-butylperoxy octanoate, t-butylperoxy pivalate, t-butylperoxy neodecanoate, t-butylperoxy benzoate, etc.; peroxy carbonates such as di-2-ethylhexylperoxy dicarbonate, diisopropylperoxy dicarbonate, di-sec-butylperoxy dicarbonate, t-butylperoxyisopropyl carbonate, etc. Of those, preferred are dialkyl peroxides. One alone or two or more of these may be used here either singly or as combined.

The amount of the radical initiator to be used is not specifically defined. Preferably, the amount is within a range of from 0.01 to 10 parts by mass relative to 100 parts by mass of the α-olefinpolymer to be used, more preferably from 0.01 to 5 parts by mass, even more preferably from 0.02 to 3 parts by mass, still more preferably from 0.05 to 2 parts by mass.

(Silane-Modified Monomer)

Specific examples of the silane-modified monomer to be reacted with the α-olefinpolymer include those represented by the following general formula (i):

$$(RO)_3\text{-Si-Y} \qquad (i)$$

(In the formula, Y represents an ethylenic unsaturated group, R represents an alkyl group, and three R's may be the same as or different from each other.)

The ethylenic unsaturated group has reactivity with the free radical site generated in the α-olefin polymer, and examples of the group include a vinyl group, an allyl group, a butenyl group, a cyclohexenyl group, a cyclopentadienyl group, and a (meth)acryloxypropyl group. Preferred are a vinyl group, a methacryloxy group and an acryloxy group.

The alkyl group may be linear or branched, and preferably has from 1 to 20 carbon atoms, more preferably from 1 to 10 carbon atoms. Specific examples of the alkyl group include a methyl group, an ethyl group, an n-propyl group, an isopropyl group, various types of butyl groups, various types of pentyl groups, various types of hexyl groups, various types of heptyl groups, various types of octyl groups, various types of nonyl groups, various types of decanyl groups, etc.

Specific examples of the silane-modified monomer include vinyltriethoxysilane, vinyltrimethoxysilane, methacryloxypropyltrimethoxysilane, methacryloxypropyltriethoxysilane, etc. Of those, preferred are vinyltriethoxysilane and

vinyltrimethoxysilane.

The proportion of the silane-modified monomer to be used partially depends on the reaction condition. The actual proportion varies in a broad range, and for example, the proportion is preferably from 0.1 to 50 parts by mass relative to 100 parts by mass of the α-olefin polymer, more preferably from 0.5 to 10 parts by mass.

As the method of reacting the above-mentioned α-olefin polymer with the radical initiator and the silane-modified monomer, herein employable is a method of reacting them through melt kneading at a temperature of from 100 to 300°C or so using a roll mill, a Banbury mixer, an extruder or the like, or a method of reacting them through solution modification at a temperature of from -50 to 300°C or so, in a suitable organic solvent such as a hydrocarbon solvent, e.g., butane, pentane, hexane, heptane, cyclohexane, toluene, xylene, decahydronaphthalene or the like, a halogenohydrocarbon solvent, e.g., chlorobenzene, dichlorobenzene, trichlorobenzene or the like, or a liquefied α-olefin or the like.

In particular, in order that the alkoxysilyl group concentration in all the monomer units is made to be 0.01 mol% or more, it is desirable that the polymer is modified at a high temperature of from 120 to 200°C or so in the absence of a solvent, from the viewpoint of increasing the radical concentration and the silane-modified monomer concentration. On the other hand, in order that the alkoxysilyl group concentration is made to be 50 mol% or less, it is desirable that the α-olefin polymer is diluted in the above-mentioned organic solvent to have a concentration of from 10 to 50% by mass, and is then modified at a low temperature of from 80 to 120°C or so.

In the functionalized α-olefin polymer of the present invention, which is produced by reacting an α-olefin polymer with a radical initiator and a silane-modified monomer as described above, an alkoxysilylethyl group bonds to the double bond remaining at the terminal of the main chain of the starting material, α-olefin, or to any other main chain. In the case, $^{13}$C-NMR of the polymer gives a peak derived from the quaternary carbon atom in the polymer chain, to which the alkoxysilylethyl group bonds, at 36 to 40 ppm.

[Curable Composition]

The curable composition of the present invention contains (A) the functionalized α-olefin polymer and (B) a curing-accelerating catalyst, and may further contain (C) a tackifier and (D) a diluent.

(B) Curing-Accelerating Catalyst

The curing-accelerating catalyst for use in the present invention includes, for example, organic metal catalysts, tertiary amines, etc.

The organic metals include, for example, organic tin metal compounds such as dibutyltin dilaurate, dibutyltin diacetate, dibutyltin dioctanoate, tin octenoate, etc.; and lead octenoate, lead naphthenate, etc.

The tertiary amines include N-triethylamine, N-methylmorpholine bis(2-dimethylaminoethyl) ether, N,N,N',N",N",N"-pentamethyldiethylenetriamine, N,N,N'-trimethylaminoethyl-ethanolamine, bis(2-dimethylaminoethyl) ether, N-methy-N'-dimethylaminoethylpiperazine, imidazole compounds in which the secondary amine functional group of the imidazole ring is substituted with a cyanoethyl group, etc.

One alone or two or more of these may be used here either singly or as combined. Of the above-mentioned catalysts, especially preferred are dibutyltin dilaurate, dibutyltin diacetate, and dibutyltin dioctanoate.

The content of the curing-accelerating catalyst (B) in the curable composition of the present invention is generally from 0.005 to 2.0% by mass relative to 100% by mass of the curable composition, preferably from 0.01 to 0.5% by mass, more preferably from 0.05 to 0.3% by mass.

(C) Tackifier

As the tackifier (tackifier resin), those having good compatibility with functionalized α-olefin polymers may be selected from a large number of typically-used tackifiers, such as rosin and its derivatives, terpenic resins and their hydrogenated resins, styrenic resins, coumarone-indene resins, dicyclopentadienic (DCPD) resins and their hydrogenated resins, aliphatic (C5-based) petroleum resins and their hydrogenated resins, aromatic (C9-based) petroleum resins and their hydrogenated resins, as well as C5-based/C9-based copolymerized petroleum resins and their hydrogenated resins, etc. One alone or two or more may be selected from these tackifiers, and may be used either singly or as combined.

As preferred tackifiers, one or a mixture of two or more are selected from a group consisting of terpenic resins and their hydrogenated resins, styrenic resins, dicyclopentadienic (DCPD) resins and their hydrogenated resins, aliphatic (C5-based) petroleum resins and their hydrogenated resins, aromatic (C9-based) petroleum resins and their hydrogenated resins, and C5-based/C9-based copolymerized petroleum resins and their hydrogenated resins, from the viewpoint of the balance thereof between re-peelability and adhesiveness to curved surfaces and concave-convex surfaces.

The content of the tackifier (C) in the curable composition of the present invention is generally from 1 to 50% by mass relative to 100% by mass of the curable composition, preferably from 2 to 45% by mass.

(D) Diluent

The diluent includes oils such as naphthenic oils, paraffinic oils, aromatic oils, etc., mixed oils of these, as well as liquid rubbers such as liquid polybutenes, liquid isopolybutylenes, etc. One alone or two or more of these may be used here either singly or as combined.

The content of the diluent (D) in the curable composition of the present invention is generally from 1 to 50% by mass relative to 100% by mass of the curable composition, preferably from 2 to 40% by mass.

(Other Components)

Not detracting from the advantageous effects of the present invention, the curable composition of the present invention may contain additives such as a filler, a pigment, an antioxidant, etc.

The filler includes an inorganic filler and an organic filler.

The inorganic filler includes silica, alumina, zinc oxide, titanium oxide, calcium oxide, magnesium oxide, iron oxide, tin oxide, antimony oxide, ferrites, calcium hydroxide, magnesium hydroxide, aluminium hydroxide, basic magnesium carbonate, calcium carbonate, zinc carbonate, barium carbonate, dawsonite, Hydrotalcite, calcium sulfate, barium sulfate, calcium silicate, talc, clay, mica, montmorillonite, bentonite, sepiolite, imogolite, sericite, glass fibers, glass beads, silica balloons, aluminium nitride, boron nitride, silicon nitride, carbon black, graphite, carbon fibers, carbon balloons, zinc borate, various magnetic powders, etc.

In place of an inorganic filler, also usable here is a inorganic bulking agent, which may be surface-treated with various coupling agents such as silane-based or titanate-based coupling agents. For the treatment method, there are mentioned a method of directly treating an inorganic filler with various coupling agents according to a dry method, a slurry method or a spray method; an integral blend method such as a direct method, a master batch method, etc.; or a dry concentrate method, etc.

The organic filler includes starch (for example, powdery starch), fibrous leather, natural organic fibers (for example, those of cellulose such as cotton, hemp, etc.), and synthetic fibers of synthetic polymers such as nylon, polyester, polyolefin, etc.

The pigment includes an inorganic pigment and an organic pigment (for example, azo pigments and polycyclic pigments).

The inorganic pigment includes oxides (titanium dioxide, zinc flower (zinc oxide), iron oxide, chromium oxide, iron black, cobalt blue, etc., as hydroxides, alumina white, iron oxide yellow, viridian, etc.), sulfides (zinc sulfide, lithopone, cadmium yellow, vermilion, cadmium red, etc.), chromates (chrome yellow, molybdate orange, zinc chromate, strontium chromate, etc.), silicates (white carbon, clay, talc, ultramarine, etc.), sulfates (precipitated barium sulfate, baryta powder, etc., as carbonates, calcium carbonate, lead white, etc.). In addition to these, also usable here are ferrocyanides (Prussian blue), phosphates (manganese violet), carbon (carbon black), etc.

The azo pigments as organic pigments include soluble azo pigments (Carmine 6B, Lake red C, etc.), insoluble azo pigments (Disazo yellow, Lake red 4R, etc.), condensed azo pigments (Cromophtal yellow 3G, Cromophtal scarlet RN, etc.), azo complexes (nickel azo yellow, etc.), benzimidazolone-azo pigments (Permanent orange HL, etc.). The polycyclic pigments as organic pigments include iso indolinone, isoindoline, quinophthalone, pyrazolone, flavanthrone, anthraquinone, diketo-pyrrolo-pyrrole, pyrrole, pyrazolone, pyranthrone, perinone, perylene, quinacridone, indigoide, oxazine, imidazolone, xanthene, carbonium, violanthrone, phthalocyanine, nitroso, etc.

The curable composition of the present invention can be produced by mixing the above-mentioned components in any desired method.

Preferably, the curing-accelerating catalyst (B) is used with mixing. For the method of adding the curing-accelerating catalyst (B), it is desirable that a catalyst master batch containing a high concentration of the curing-accelerating catalyst (B) is previously prepared, and the catalyst master batch is blended, mixed or melted with any other components.

Also the curable composition of the present invention may be produced using a solvent.

The curable composition of the present invention may be dissolved in a solvent for use as a solvent-based adhesive, and then applied to or sprayed on the surface of an adherend substrate to thereby form a coating film, which enables adhesion to a body to be adhered.

Further, the polymerizable composition of the present invention may be dispersed in a polar solvent such as water or the like or formed into an emulsion therein, and then may be used as an adhesive. In addition, the curable composition of the present invention may be formed into a sheet or a film, then sandwiched between adhesive substrates, heated at a temperature not lower than the temperature at which the curable composition becomes flowable to adhere the substrates, and cooled and solidified to bond them.

[Cured Product]

The present invention also provides a cured product produced by curing the above-mentioned curable composition.

The curable composition of the present invention can be cured at low temperatures. Concretely, by curing the curable composition of the present invention at 100°C or lower, preferably at from room temperature to 90°C, more preferably at from 40 to 80°C, a cured product can be produced. The curing reaction may be attained by bringing the composition into contact with water or moisture and aging it under heat or at room temperature to cure the composition. For contact with water or moisture, for example, the curable adhesive composition of the present invention may be left in air, may be dipped in a water tank or may be exposed to steam applied thereto. The temperature may be room temperature (25°C), but at a high temperature, the composition may be cured within a short period of time.

The curable composition of the present invention may be applied to uses of resin compatibilizing agents, polyolefin emulsions, reactive adhesives, reactive hot-melt adhesives, other adhesives, pressure-sensitive adhesives, sealants, sealing materials, potting materials, reactive plasticizers, modifiers, etc.

The cured product of the present invention may be applied to uses of reactive adhesives, reactive hot-melt adhesives, other adhesives, pressure-sensitive adhesives, pressure-sensitive adhesive tapes, sealants, sealing materials, potting materials, reactive plasticizers, modifiers, etc. The cured product produced according to the above-mentioned curing method is resistant to heat and therefore can be used even in high-temperature environments.

Examples

Next, the present invention will be more specifically explained with reference to Examples but is not limited thereto.

[$^{13}$C-NMR measurement]

The $^{13}$C-NMR spectrum was measured using the following device under the following conditions, and the 2,1-bond fraction, the 1,3-bond fraction, the 1,4-bond fraction, the meso-pentad fraction [mmmml, the meso-diad fraction [m] and the racemic-pentad fraction [rrrr] were determined.

Device: $^{13}$C-NMR spectrometer, JNM-EX400 series available from JEOL, Ltd.
Method: proton complete decoupling
Concentration: 230 mg/mL
Solvent: mixed solvent of 1,2,4-trichlorobenzene/deuterated benzene (volume ratio 90:10)
Temperature: 130°C
Pulse width: 45°
Pulse repetition time: 4 seconds
Accumulation: 10,000 times

[DSC measurement]

Using a differential scanning calorimeter (DSC-7 available from PerkinElmer, Inc.), 10 mg of a sample was kept in a nitrogen atmosphere at -10°C for 5 minutes, and then heated at 10°C/min to determine the melt endotherm ΔH-D, the melting point Tm, and the glass transition temperature Tg thereof.

[GPC measurement]

According to a gel permeation chromatography (GPC) process, the weight-average molecular weight (Mw) and the molecular weight distribution (Mw/Mn) were determined. For the measurement, the following device was used under the following conditions, and the polystyrene-equivalent weight-average molecular weight was determined.

<GPC device>

Column: TOSO GMHHR-H(S)HT
Detector: RI detector for liquid chromatography, Waters 150C

<Measurement conditions>

Solvent: 1,2,4-trichlorobenzene
Measurement temperature: 145°C
Flow rate: 1.0 mL/minute
Sample (concentration: 2.2 mg/mL
Injection amount: 160 μL
Calibration curve: Universal Calibration
Analysis software: HT-GPC (ver. 1.0)

[Alkoxysilyl group concentration in all monomer units]

The alkoxysilyl group concentration was calculated from the concentration of the peak derived from the hydrogen atom on the carbon atom adjacent to the oxygen atom of the alkoxysilyl group appearing at around from 3.7 to 4.1 ppm in 1H-NMR.

Hydrogen on the carbon atom adjacent to the oxygen atom of the alkoxysilyl group (i): value of integral at 3.7 to 4.1 ppm
All propylene units -($CH_2CH(Me)$)- (ii): total values of integral of peaks appearing at 0.7 to 1.7 ppm
All butene units -($CH_2CH(Et)$) (iii): value of integral of peak appearing at 0.7 to 1.7 ppm

$$\text{Alkoxysilyl group concentration in all monomer units} = [[(i)/6]/\{(ii)/6+(iii)/8\}]\times 100 \text{ (mol\%)}$$

[Curability]

The curing state of the cured product obtained by curing the curable composition in Examples and Comparative Examples was evaluated under the following criteria.

A: A cured product having rubber elasticity at 25°C was obtained.
B: A cured product having rubber elasticity at 50°C was obtained.
C: A cured product having rubber elasticity at 50°C was obtained, but was sticky.
D: A cured product having rubber elasticity even at 50°C could not be obtained. (The product was readily torn.)

[Heat Resistance of Cured Product]

The cured product was heated in a glass oven at 120°C for 10 minutes, and after heated, the appearance of the cured product was visually observed and the rubber elasticity of the cured product was tactually evaluated under the following criteria.

A: The product maintained the shape and had rubber elasticity. The product did not adhere to hand by touch.
B: The product maintained the shape and had rubber elasticity, but adhered to hand by touch.
C: The product could not maintain the shape and did not have rubber elasticity.
D: Evaluation impossible (owing to Si denaturation).

Production Example 1

[Production of

(1,2'-dimethylsilylene)(2.1'-dimethylsilylene)-bis(3-phenylindenyl)zirconium dichloride (complex A)]

In a nitrogen stream atmosphere, 76.5 mL (229.5 mmol) of a diethyl ether solution of phenylmagnesium bromide was put into a 1000-mL flask, and cooled in an ice bath. 30 g (227.2 mmol) of 1-indanone dissolved in 300 mL of diethyl ether was gradually and dropwise added thereto. After stirred at room temperature for 1 hour, this was cooled in an ice bath, and 6 mol/L of hydrochloric acid was dropwise added thereto. After this was stirred at room temperature, the organic layer was extracted with diethyl ether, and washed with an aqueous saturated sodium hydrogencarbonate

solution. The aqueous layer was separated through liquid-liquid separation, the organic layer was dried, and the solvent was removed to give 37.2 g (193.4 mmol) of 1-phenylindene (yield 85%).

Next, 16.7 g (87.1 mmol) of the resultant 1-phenylindene was put in a 300-mL flask, and dissolved in 70 mL of dimethyl sulfoxide. 4 mL of water was added thereto, and cooled in an ice bath. 15.6 g (87.1 mmol) of N-bromosuccinimide was gradually added thereto, and stirred at room temperature for 10 hours. This was cooled in an ice bath, 60 mL of water was added thereto, and the organic layer was extracted with diethyl ether. The liquid phase was separated through liquid-liquid separation, the organic phase was dried, and the solvent was removed to give 24.0 g (83.3 mmol) of a crude product of 2-bromo-1-indan-l-ol (crude yield 96%).

24.0 g (83.3 mmol) of the crude product of 2-bromo-1-indan-1-ol obtained in the above was put in a 300-mL flask, dissolved in 200 mL of toluene, and 0.48 g (2.5 mmol) of p-toluenesulfonic acid was added thereto. A Dean-Stark tube was fitted to the flask, and the content was refluxed for 2 hours. The solvent was evaporated away, the organic layer was extracted with diethyl ether, and washed with an aqueous saturated sodium hydrogencarbonate solution. The aqueous phase was separated through liquid-liquid separation, the organic phase was dried and the solvent was removed to give a crude product of 2-bromo-1-phenylindene. This was purified in a column to give 17.9 g (66.4 mmol) of 2-bromo-1-phenylindene (yield 80%).

Next, in a nitrogen stream atmosphere, 2.7 g (10.0 mmol) of the resultant 2-bromo-1-phenylindene was put in a 200-mL Schlenk bottle, dissolved in 50 mL of diethyl ether, cooled to 0°C, and 3.8 mL (10.0 mmol) of a hexane solution of n-butyllithium (n-BuLi) (concentration 2.6 mol/l) was added thereto and stirred at room temperature for 3 hours. This was again cooled to 0°C, and 30 mL of diethyl ether and 12.5 mL (20.0 mmol) of a pentane solution of t-butyllithium (t-BuLi) (concentration 1.6 mol/1) were added thereto and stirred at room temperature for 3 hours.

After stirred, this was cooled to -78°C, and 0.6 mL (5.0 mmol) of dichlorodimethylsilane was dropwise added thereto, and stirred overnight at room temperature. This was again cooled to -78°C, and 0.6 mL (5.0 mmol) of dichlorodimethylsilane was dropwise added thereto, and stirred overnight at room temperature. Subsequently, water was added to stop the reaction, and 1.1 g (2.2 mmol) of (1,2'-dimethylsilylene)(2,1'-dimethylsilylene)bis(3-phenylindene) precipitated and this was collected through filtration (yield 44%).

Next, in a Schlenk bottle, 1.6 g (3.2 mmol) of (1,2'-dimethylsilylene)(2,1'-dimethylsilylene)bis(3-phenylindene) obtained in the above was dissolved in 12.6 mL of diethyl ether, cooled to 0°C, then 2.6 mL (6.6 mmol) of a hexane solution of n-butyl lithium (n-BuLi) (concentration 2.6 mol/1) was added thereto, again restored to room temperature and stirred for 1 hour.

The solvent was evaporated away from the resultant solution, and the remaining solid was washed with 20 mL of hexane and then dried under reduced pressure to quantitatively give an ether adduct of a lithium salt of (1,2'-dimethylsilylene)(2,1'-dimethylsilylene)bis(3-phenylindene), as a white solid.

In a nitrogen stream atmosphere, the ether adduct of the lithium salt obtained in the above was suspended in 18 mL of methylene chloride, and cooled to -78°C. A methylene chloride (8 mL) suspension of 0.74 g (3.2 mmol) of zirconium tetrachloride previously cooled to -78°C was dropwise added thereto, then restored to room temperature and stirred for 4 hours.

The resultant solution was filtered, and the filtrate was concentrated to give a yellow solid precipitate. This was washed with 10 mL of hexane to give 1.3 g (2.0 mmol) of a yellow microcrystal of (1,2'-dimethylsilylene)(2,1'-dimethylsilylene)bis(3-phenylindenyl)zirconium dichloride (complex A). (Yield 62%)

The $^{1}$H-NMR spectrum of the yellow microcrystal measured here gave the following results.

$^{1}$H-NMR (500 MHz, $CDCl_3$): $\delta$ 0.31 (s,-MezSi-,6H), 1.21 (s,-MezSi-,6H), 7.18-7.69 (m,Ar-H,18H)

Production Example 2

[Production of (1,1'-ethylene)(2,2'-tetramethyldisilylene)bisindenylzirconium dichloride (complex B)]

Magnesium (12 g, 500 mmol) and tetrahydrofuran (30 mL) were put into a 500-mL two-neck flask, and 1,2-dibromoethane (0.2 mL) was dropwise added thereto to activate the magnesium. 2-Bromoindene (20 g, 103 mmol) dissolved in tetrahydrofuran (150 mL) was dropwise added thereto, and stirred at room temperature for 1 hour. Subsequently, 1,2-dichlorotetramethyldisilane (9.4 mL, 5.1 mmol) was dropwise added thereto at 0°C. The reaction mixture was stirred at room temperature for 1 hours, then the solvent was evaporated away, and the residue was extracted with hexane (150 mL × 2) to give 1,2-di(1H-inden-2-yl)-1,1,2,2-tetramethyldisilane as a white solid (15,4 g, 44.4 mmol, yield 86%).

This was dissolved in diethyl ether (100 mL), n-butyllithium (2.6 mol/liter, 38 mL, 98 mmol) was dropwise added thereto at 0°C, and stirred at room temperature for 1 hour to give a white powder precipitate. The supernatant was removed, and the solid was washed with hexane (80 mL) to give a lithium salt as a white powdery solid (14.6 g, 33.8 mmol, 76%).

This was dissolved in tetrahydrofuran (120 mL), and 1.2-dibromoethane (2.88 mL, 33.8 mmol) was dropwise

added thereto at -30°C. The reaction mixture was stirred at room temperature for 1 hour, then dried to solidness, and the residue was extracted with hexane (150 mL) to give a di-crosslinked ligand as a colorless oily liquid (14.2 g, 37.9 mmol).

This was dissolved in diethyl ether (120 mL), and n-butyllithium (2.6 mol/mL, 32 mL, 84 mmol) was dropwise added thereto at 0°C, and stirred at room temperature for 1 hour to give a white powder precipitate. The supernatant was removed, and the solid was washed with hexane (70 mL) to give a lithium salt of the dicrosslinked ligand as a white powder (14.0 g, 31 mmol, yield 81%).

A toluene (30 mL) suspension of zirconium tetrachloride (1.52 g, 6.54 mmol) was dropwise added at -78°C to a toluene (30 mL) suspension of the resultant dicrosslinked ligand lithium salt (3.00 g, 6.54 mmol), via a cannula. The reaction mixture was stirred at room temperature for 2 hours, then the supernatant was separated, and further the residue was extracted with toluene.

Under reduced pressure, the supernatant and the solvent of the extract were removed and dried to solidness to give

(1,1'-ethylene)(2,2'tetramethyldisilylene)bisindenylzirconium dichloride (complex B) represented by the following formula (1), as a yellow solid (2.5 g, 4.7 mmol, yield 72%).

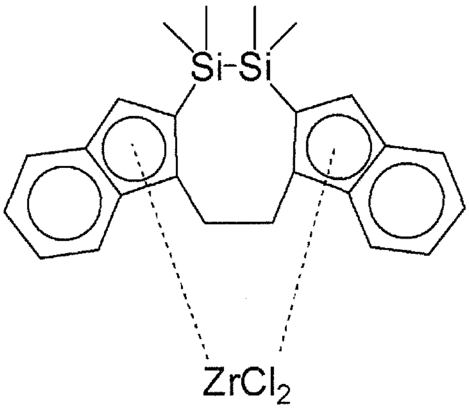

(1)

The measured results of $^1$H-NMR are shown below.

$^1$H-NMR ($CDCl_3$): δ 0.617 (s,6H,-$SiMe_2$-), 0.623 (s,6H,-$SiMe_2$-), 3.65-3.74, 4.05-4.15 (m,4H,$CH_2CH_2$), 6.79 (s,2H,CpH), 7.0-7.5 (m,8H,Aromatic-H)

Production Example 3

[Production of

(1,2'-dimethylsilylene)(2,1'-dimehtylsilylene)bis(3-trimethylsilylmethylindenyl)zir conium dichloride (complex C)]

In a nitrogen stream atmosphere, 2.5 g (7.2 mmol) of (1,2'-dimethylsilylene)(2,1'-dimethylsilylene)bis(indene) and 100 mL of ether were put in a 200-mL Schlenk bottle. This was cooled to -78°C, and 9.0 mL (14.8 mmol) of a hexane solution (1.6 mol/1) of n-butyllithium (n-BuLi) was added thereto, and then stirred at room temperature for 12 hours. The solvent was evaporated away, and the resultant solid was washed with 20 mL of hexane, and dried under reduced pressure to quantitatively give a lithium salt as a white solid. In a Schlenk bottle, the lithium salt of (1,2'-dimethylsilylene)(2,1'-dimethylsilylene)bis(indene) (6.97 mmol) was dissolved in 50 mL of THF (tetrahydrofuran), then 2.1 mL (14.2 mmol) of iodomethyltrimethylsilane was gradually and dropwise added thereto at room temperature and stirred for 12 hours. The solvent was evaporated away, then 50 mL of ether was added to the residue, and washed with a saturated ammonium chloride solution. After liquid-liquid separation, the organic phase was dried and the solvent was removed to give 3.04 g (5.9 mmol) of (1,2'-dimethylsilylene)(2,1'-dimethylsilylene)bis(3-trimethylsilylmethylindene) (yield 84%). Next, in a nitrogen stream atmosphere , 3.04 g (5.9 mmol) of (1,2'-dimethylsilylene)(2,1'-dimethylsilylene)bis(3-trimethylsilylmethylindene) and 50 mL of ether were put in a Schlenk bottle. This was cooled to -78°C, and 7.4 mL (11.8 mmol) of a hexane solution (1.6 mol/liter) of n-butyllithium (n-BuLi) was added thereto, and stirred at room temperature for 12 hours. The solvent was evaporated away, and the resultant solid was washed with 40 mL of hexane to give 3.06 g of a lithium salt as an ether adduct thereof.

The $^1$H-NMR of this gave the following results.

$^1$H-NMR (90 MHz, THF-d8): δ 0.04 (s,-$SiMe_3$,18H), 0.48 (s,-$Me_2Si$-,12H), 1.10 (t,-$CH_3$,6H), 2.59 (s,-$CH_2$-,4H), 3.38 (q,-$CH_2$-,4H), 6.2-7.7 (m,Ar-H,BH)

In a nitrogen stream atmosphere, 3.06 g of the lithium salt obtained in the above was suspended in 50 mL of toluene. This was cooled to -78°C, and a toluene (20 mL) suspension of 1.2 g (5.1 mmol) of zirconium tetrachloride previously cooled to -78°C was dropwise added thereto. After the dropwise addition, this was stirred at room temperature for 6 hours. The solvent of the reaction solution as evaporated away, and the resultant residue was recrystallized with dichloromethane to give 0.9 g (1.33 mmol) of a yellow microcrystal of (1.2'-dimethylsilylene)(2,1'-dimethylsilylene)bis(3-trimethylsilylmethylindenyl)zir conium dichloride (yield 26%).
The $^1$H-NMR of this gave the following results.
$^1$H-NMR (90 MHz, $CDCl_3$): $\delta$ 0.0 (s.-$SiMe3^-$,18H), 1.02, 1.12 (s,-$Me_2Si$-,12H). 2.51 (dd,-$CH_2$-,4H), 7.1-7.6 (m,Ar-H,8H)

[Production of dimethylsilylene($\eta^1$-tert-butylamide)($\eta^5$-tetramethylcyclopentadiene)titanium dichloride (complex D)]

This was synthesized with reference to the description in Organometallics 2000, 19, 1870-1878.

Production Example 4 [Production of Polymer (A)]

400 mL of heptane, 0.5 mmol of triisobutylaluminium. 0.2 ($\mu$mol of the complex A and 0.8 $\mu$mol of tetrakispentafluorophenyl borate were put into a one-liter autoclave that had been dried by heating, and further, 0.05 MPa of hydrogen was introduced thereinto. With stirring, propylene was charged thereinto, then pressurized up to a total pressure of 0.7 MPa, and polymerized at a temperature of 70°C for 30 minutes. After the polymerization, propylene and hydrogen were removed by degassing, and the polymerization liquid was heated and dried under reduced pressure to give 100 g of a polymer (A), terminal-unsaturated liquid polypropylene.
With respect to the resultant polymer (A), measured were the melt endotherm $\Delta$H-D, the glass transition temperature (Tg), the melting point (Tm), the meso-pentad fraction [mmmm], the weight-average molecular weight (Mw) and the molecular weight distribution (Mw/Mn). The results are shown in Table 1.

Production Example 5 [Production or Polymer (B)]

Heptane (200 mL), triisobutylaluminium (2 M, 0.2 mL, 0.4 mmol), butene-1 (200 mL), the complex B (10 $\mu$mol/mL, 0.20 mL, 2.0 $\mu$mol) and MAO available from Tosoh Finechem Corporation (2000 $\mu$mol) were put into a one-liter autoclave that had been dried by heating, and further, 0.1 MPa of hydrogen was introduced thereinto. With stirring, this was heated up to 70°C and polymerized for 30 minutes. After the polymerization, the reaction was stopped with 5 mL of ethanol, and the reaction product was dried under reduced pressure to give 82 g of a polymer (B).
With respect to the resultant polymer (B), measured were the melt endotherm $\Delta$H-D, the glass transition temperature Tg, the melting point Tm, the meso-pentad fraction [mmmm], the weight-average molecular weight (Mw) and the molecular weight distribution (Mw/Wn). The results are shown in Table 1.

Production Example 6 [Production of Polymer (C)]

Heptane (600 mL), triisobutylaluminium (2 M, 0.3 mL, 0.6 mmol), a heptane slurry of the complex B (10 $\mu$mol/mL, 0.1 mL, 1.0 $\mu$mol), and a toluene solution of methylaluminoxane available from Albemarle (0.33 mL, 3 M, 1.0 mmol) were put into a 2-liter autoclave that had been dried by heating, and further, 0.04 MPa of hydrogen was introduced thereinto. With stirring and simultaneously with heating up to 70°C, propylene was introduced, and pressurized up to 0.70 MPa. Subsequently, propylene was continuously supplied to keep the total pressure of 0.70 MPa, and polymerized for 1 hour. After the polymerization, the reaction was stopped with 5 mL of ethanol. After depressurized, the reaction product was taken out, and dried under reduced pressure to give 170 g of a polymer (C).
With respect to the resultant polymer (C), measured were the melt endotherm $\Delta$H-D, the glass transition temperature Tg, the melting point Tm, the meso-pentad fraction [mmmm], the weight-average molecular weight (Mw) and the molecular weight distribution (Mw/Mn). The results are shown in Table 1.

Production Example 7 [Production of Polymer (D)]

400 mL of heptane, 0.5 mmol of triisobutylaluminium, 0.2 $\mu$mol of the complex C and 0.8 $\mu$mol of dimethylanilinium tetrakispentafluorophenylborate were put into a one-liter autoclave that had been dried by heating, and further, 0.2 MPa of hydrogen was introduced thereinto. 0.6 MPa of propylene was introduced to have a total pressure of 0.8 MPa, and polymerized at a polymerization temperature of 70°C for 60 minutes. After the polymerization, the reaction product was dried under reduced pressure to give 110 g of a propylene polymer.
With respect to the resultant polymer (D), measured were the melt endotherm $\Delta$H-D, the glass transition temperature Tg, the melting point Tm, the meso-pentad fraction [mmmm], the weight-average molecular weight (Mw) and the molecular weight distribution (Mw/Mn). The results are shown in Table 1.

Production Example 8 [Production of Polymer (E)]

(1) Preparation of Solid Catalyst Component

A three-neck flask having an internal volume of 0.5 liters and equipped with a stirrer was purged with nitrogen gas, and then 20 mL of dewatered heptane, 4 g of diethoxymagnesium and 1.6 g of dibutyl phthalate were added thereto, and while the system was kept at 90°C and with stirring, 4 mL of titanium tetrachloride was dropwise added thereto. Further, 111 mL of titanium tetrachloride was dropwise added thereto and heated up to 110°C. 115 mL of titanium tetrachloride was added to the resultant solid phase portion, and further reacted at 110°C for 2 hours. After the reaction, the product was washed a few times with 100 mL of pure heptane to give a solid catalyst component.

(2) Preparation of Prepolymerized Catalyst Component

A three-neck flask having an internal volume of 0.5 liters and equipped with a stirrer was purged with nitrogen gas, and then 300 mL of dewatered heptane, and 10 g of the solid catalyst component prepared in the above (1) were added thereto. The system was made to be at 15°C, and then 4.2 mmol of triethylaluminium and 1.1 mmol of cyclohexylmethyldimethoxysilane (CHMDS) were added thereto, and propylene was introduced with stirring. After 2 hours, the stirring was stopped, and as a result, there was prepared a prepolymerized catalyst component where propylene was polymerized in an amount of 2 g per g of the solid catalyst component.

(3) Synthesis of Propylene Polymer

A stainless autoclave having an internal volume of 10 liters and equipped with a stirrer was fully dried and purged with nitrogen, and then 2 kg of propylene, 6 mmol of triethylaluminium, and 3.0 mmol of dicyclopentyldimethoxysilane (DCPDS) were added thereto and heated up to 65°C. Next, 0.12 g of the prepolymerized catalyst component prepared in the above (2) was put into it and the monomer was polymerized at 70°C for 3 hours. As a result, there was produced 960 g of a polymer (E), polymer powder.

With respect to the resultant polymer (E), measured were the melt endotherm ΔH-D, the glass transition temperature Tg, the melting point Tm, the meso-pentad fraction [mmmm], the weight-average molecular weight (Mw) and the molecular weight distribution (Mw/Mn). The results are shown in Table 1.

Production Example 9 [Production of Polymer (F)]

400 mL of heptane, 0.5 mmol of triisobutylaluminium, 0.2 μmol of the complex D and 0.8 μmol of tetrakispentafluorophenyl borate were put into a one-liter autoclave that had been dried by heating, and further, 0.05 MPa of hydrogen was introduced thereinto. With stirring, propylene was charged thereinto, then pressurized up to a total pressure of 0.5 MPa, and polymerized at a temperature of 90°C for 60 minutes. After the polymerization, propylene and hydrogen were removed by degassing, and the polymerization liquid was heated and dried under reduced pressure to give 50 g of polypropylene (polymer (F)).

With respect to the resultant polymer (F), measured were the melt endotherm ΔH-D, the glass transition temperature Tg, the melting point Tm, the meso-pentad fraction [mmmm], the weight-average molecular weight (Mw) and the molecular weight distribution (Mw/Mn). The results are shown in Table 1.

Production Example 10 [Production of Polymer (G)]

600 mL of heptane, 0.6 mmol of triisobutylaluminium, 0.4 μmol of the complex C and 0.8 μmol of dimethylanilinium tetrakispentafluorophenylborate were put into a two-liter autoclave that had been dried by heating, and with fully stirring and while the solution was kept at a temperature of 50°C, 0.2 MPa of butane-1 and further 0.05 MPa of hydrogen were introduced, and 0.6 MPa of propylene was introduced to be at a total pressure of 0.85 MPa and polymerized at a polymerization temperature of 70°C for 20 minutes. After the polymerization, the reaction product was dried under reduced pressure to give 47.6 g of a propylene-1-butene copolymer.

With respect to the resultant polymer (G), measured were the melt endotherm ΔH-D, the glass transition temperature Tg, the melting point Tm, the meso-diad fraction [m], the weight-average molecular weight (Mw) and the molecular weight distribution (Mw/Mn). The results are shown in Table 1.

Table 1

| | Production Example 4 | Production Example 5 | Production Example 6 | Production Example 7 | Production Example 8 | Production Example 9 | Production Example 10 |
|---|---|---|---|---|---|---|---|
| Catalyst | Complex A | Complex B | Complex B | Complex C | $TiCl_4$ | Complex D | Complex C |
| Polymer | Polymer (A) | Polymer (B) | Polymer (C) | Polymer (D) | Polymer (E) | Polymer (F) | Polymer (G) |
| Monomer | propylene, | 1-butene | propylene | propylene | propylene | propylene | propylene, 1-butene |
| Melt Endotherm ΔH-D (J/g) | 0 | 0 | 0 | 25 | 95 | 0 | 0 |
| Meso-Pentad Fraction [mmmm] (mol%) | 1.8 | 5.8 | 7.1 | 43 | 98.5 | 2.1 | - |
| Meso-Diad Fraction [m](mol%) | - | - | - | - | - | - | 67 |
| Molecular Weight (Mw) | 8,000 | 34,500 | 43,000 | 32,000 | 132,500 | 7,700 | 57,700 |
| Molecular Weight Distribution (Mw/Mn) | 1.7 | 2 | 2.1 | 1.8 | 2.4 | 2.2 | 2.1 |
| Glass Transition Temperature Tg (°C) | 0 | -30 | 0 | 0 | 0 | 0 | -19 |
| Melting Point Tm (°C) | not detected | not detected | not detected | 86 | 159 | not detected | not detected |
| 2,1-blond Fraction | 0 | 0 | 0 | 0 | 0 | 1.9 | 0 |
| 1,3-Bond Fraction and 1,4-Bond Fraction | 0 | 0 | 0 | 0 | 0 | 0.6 | 0 |

Example 1 [Production of Liquid Functionalized Propylene Homopolymer]

60 g of the polymer (A) produced in Production Example 4, 50 mL of toluene and 3 g of triethoxyvinylsilane were put into a 500-mL separable flask. This was heated with stirring so that the internal temperature could be 110°C, and after the mixture became uniform, 0.72 g of Percumyl P (available from NOF Corporation) was dropwise added thereto taking about 20 minutes.

A large quantity of ethanol was put into the resultant polymer and fully stirred, and then the solution layer was separated to remove the unreacted monomer. Further, this was dried in vacuum at 150°C to remove the solvent.

The resultant polymer was analyzed through $^{1}$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene homopolymer was analyzed through $^{13}$C-NMR, DSC and GPC. The measured results are shown in Table 2.

Example 2 [Production of Liquid Functionalized 1-Butene Homopolymer]

60 g of the polymer (B) produced in Production Example 5, 50 mL of toluene and 3 g of triethoxyvinylsilane were put into a 500-mL separable flask. This was heated with stirring so that the internal temperature could be 110°C, and after the mixture became uniform, 0.72 g of Percumyl P (available from NOF Corporation) was dropwise added thereto taking about 20 minutes.

A large quantity of ethanol was put into the resultant polymer and fully stirred, and then the solution layer was separated to remove the unreacted monomer. Further, this was dried in vacuum at 150°C to remove the solvent.

The resultant polymer was analyzed through $^{1}$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized 1-butene homopolymer was analyzed through $^{13}$C-NMR, DSC and GPC. The measured results are shown in Table 2.

Example 3 [Production of Liquid Functionalized Propylene Homopolymer]

60 g of the polymer (C) produced in Production Example 6, 50 mL of toluene and 3 g of triethoxyvinylsilane were put into a 500-mL separable flask. This was heated with stirring so that the internal temperature could be 110°C, and after the mixture became uniform, 0.72 g of Percumyl P (available from NOF Corporation) was dropwise added thereto taking about 20 minutes.

The resultant polymer was dissolved in toluene, and a large quantity of ethanol was put thereinto to precipitate the formed polymer, and the unreacted monomer was removed. Further, this was dried in vacuum at 150°C to remove the solvent.

The resultant polymer was analyzed through $^{1}$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene homopolymer was analyzed through $^{13}$C-NMR, DSC and GPC. The measured results are shown in Table 2.

Example 4 [Production of Liquid Functionalized Propylene Homopolymer]

60 g of the polymer (C) produced in Production Example 6 and 3 g of triethoxyvinylsilane were put into a 500-mL stainless separable flask. While this was heated with stirring so that the internal temperature could be 155 to 160°C, 0.72 g of Perhexa 25B (available from NOF Corporation) was dropwise added thereto taking about 20 minutes.

The resultant polymer was dissolved in toluene, and a large quantity of ethanol was put thereinto to precipitate the formed polymer, and the unreacted monomer was removed. Further, this was dried in vacuum at 150°C to remove the solvent.

The resultant polymer was analyzed through $^{1}$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene homopolymer was analyzed through $^{13}$C-NMR, DSC and GPC. The measured results are shown in Table 2.

Example 5 [Production of Liquid Functionalized Polypropylene]

60 g of the polymer (F) produced in Production Example 9, 50 mL of toluene and 3 g of triethoxyvinylsilane were put into a 500-mL separable flask. This was heated with stirring so that the internal temperature could be 110°C, and after the mixture became uniform, 0.72 g of Percumyl P (available from NOF Corporation) was dropwise added thereto taking about 20 minutes.

The resultant polymer was dissolved in toluene, and a large quantity of ethanol was put thereinto to precipitate the formed polymer, and the unreacted monomer was removed. Further, this was dried in vacuum at 150°C to remove the solvent.

The resultant polymer was analyzed through $^1$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene homopolymer was analyzed through $^{13}$C-NMR, DSC and GPC. The measured results are shown in Table 2.

Example 6 [Production of Curable Composition and Cured Product]

15 mg of dibutyltin dilaurate was added to 10 g of the liquid functionalized propylene homopolymer obtained in Example 1, at room temperature (25°C), and stirred to be uniform, thereby giving a curable composition. Subsequently, this was cast into a container of $10 \times 10 \times 0.5$ cm$^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Example 7 [Production of Curable Composition and Cured Product]

15 mg of dibutyltin dilaurate was added to 10 g of the liquid functionalized 1-butene homopolymer obtained in Example 2, at room temperature (25°C), and stirred to be uniform, thereby giving a curable composition. Subsequently, this was cast into a container of $10 \times 10 \times 0.5$ cm$^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Example 8 [Production of Curable Composition and Cured Product]

15 mg of dibutyltin dilaurate was added to 10 g of the liquid functionalized propylene homopolymer obtained in Example 3, at 50°C, and stirred to be uniform, thereby giving a curable composition. Subsequently, this was cast into a container of $10 \times 10 \times 0.5$ cm$^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Example 9 [Production of Curable Composition and Cured Product]

15 mg of dibutyltin dilaurate was added to 10 g of the liquid functionalized propylene homopolymer obtained in Example 4, at 50°C, and stirred to be uniform, thereby giving a curable composition. Subsequently, this was cast into

a container of 10 × 10 × 0.5 $cm^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Example 10 [Production of Curable Composition and Cured Product]

15 mg of dibutyltin dilaurate was added to 10 g of the liquid functionalized propylene homopolymer obtained in Example 5, at 50°C, and stirred to be uniform, thereby giving a curable composition. Subsequently, this was cast into a container of 10 × 10 × 0.5 $cm^3$, and kept statically therein. The resultant composition was dried under reduced pressure at 60°C for 8 hours to form a sheet, and the sheet was left in an atmosphere at 23°C and at a humidity of 50% for 168 hours to give a cured product. When touched, the cured product somewhat adhered to the hand.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity. When touched in this stage, the cured product somewhat adhered to the hand.

The evaluation results of the curing reactivity of the curable composition and the heat resistance of the cured product are shown in Table 3.

Example 11 [Production of Liquid Functionalized Propylene-1-Butene Copolymer]

60 g of the polymer (G) produced in Production Example 10, 50 mL of toluene and 3 g of triethoxyvinylsilane were put into a 500-mL separable flask. This was heated with stirring so that the internal temperature could be 110°C, and after the mixture became uniform, 0.72 g of Percumyl P (available from NOF Corporation) was dropwise added thereto taking about 20 minutes.

A large quantity of ethanol was poured into the resultant polymer and well stirred, and the solution layer was separated to remove the unreacted monomer. Further, this was dried in vacuum at 150°C to remove the solvent.

The resultant polymer was analyzed through $^1$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene-1-butene copolymer was analyzed through $^{13}$C-NMR, DSC and GPC. The measured results are shown in Table 2.

Example 12 [Production of Liquid Functionalized Propylene-1-Butene Copolymer]

60 g of the polymer (G) produced in Production Example 10 and 3 g of triethoxyvinylsilane were put into a 500-mL stainless separable flask. While this was heated with stirring so that the internal temperature could be 155 to 160°C, 0.72 g of Perhexa 25B (available from NOF Corporation) was dropwise added thereto taking about 20 minutes. The resultant polymer was dissolved in toluene, and a large quantity of ethanol was put thereinto to precipitate the formed polymer, and the unreacted monomer was removed. Further, this was dried in vacuum at 150°C to remove the solvent.

The resultant polymer was analyzed through $^1$H-NMR, in which a peak assigned to an alkoxysilyl group appeared at around 3.5 ppm. This confirmed progression of silane modification. Further in $^{13}$C-NMR, a peak assigned to a quaternary carbon appeared at 36 to 40 ppm.

The resultant, liquid functionalized propylene-1-butene copolymer was analyzed through $^{13}$C-NMR, DSC and GPC. The measured results are shown in Table 2.

Example 13 [Production of Curable Composition and Cured Product]

15 mg of dibutyltin dilaurate was added to 10 g of the liquid functionalized propylene-1-butene copolymer obtained in Example 11 at 50°C, and stirred to be uniform, thereby giving a curable composition. Subsequently, this was cast into a container of 10 × 10 × 0.5 $cm^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for

shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Example 14 [Production of Curable Composition and Cured Product]

15 mg of dibutyltin dilaurate was added to 10 g of the liquid functionalized propylene-1-butene copolymer obtained in Example 12 at 50°C, and stirred to be uniform, thereby giving a curable composition. Subsequently, this was cast into a container of 10 × 10 × 0.5 $cm^3$, and kept statically therein. The resultant composition was dried under reduced pressure at 60°C for 8 hours to form a sheet, and the sheet was left in an atmosphere at 23°C and at a humidity of 50% for 168 hours to give a cured product.

The resultant cured product was heated on a hot plate controlled at 120°C for 10 minutes, and checked for shape change. As a result, it was confirmed that this was a cured product capable of maintaining the shape thereof under the heat condition and exhibiting rubber elasticity.

The evaluation results of the curing reactivity of the curable composition and the heat resistance of the cured product are shown in Table 3.

Comparative Example 1 [Production of Functionalized Propylene Homopolymer]

A functionalized propylene homopolymer was produced in the same manner as in Example 6, using the polymer (D) obtained in Production Example 7 as the starting material polymer. The alkoxysilyl group concentration in all the monomer units was 0.16 mol%.

The resultant functionalized propylene homopolymer was analyzed through $^{13}$C-NMR, DSC and GPC. The measured results are shown in Table 2.

In addition, production of a curable composition was tried in the same manner as in Example 9, however, the polymer did not melt at 50°C and a curable composition could not be produced.

The evaluation results of the curing reactivity of the curable composition and the heat resistance of the cured product are shown in Table 3.

Comparative Example 2 [Production of Functionalized Propylene Homopolymer]

60 g of the polymer (E) produced in Production Example 8 and 3 g of triethoxyvinylsilane were put into a 500-mL stainless separable flask. While this was heated with stirring so that the internal temperature could be 180 to 190°C, 0.72 g of Perhexa 25B (available from NOF Corporation) was dropwise added thereto taking about 20 minutes.

The resultant polymer was dissolved in toluene, and a large quantity of ethanol was put thereinto to precipitate the formed polymer, and the unreacted monomer was removed. Further, this was dried in vacuum at 150°C to remove the solvent.

The resultant functionalized propylene homopolymer was analyzed through $^{13}$C-NMR, DSC and GPC. The measured results are shown in Table 2.

The resultant functionalized propylene homopolymer was analyzed through $^{1}$H-NMR, in which a peak assigned to an alkoxysilyl group appeared at around 3.5 ppm. This confirmed progression of silane modification. The alkoxysilyl group concentration in all the monomer units was 0.03 mol%.

Production of a curable composition was tried in the same manner as in Example 9; however, the polymer did not melt at 50°C and a curable composition could not be produced.

The evaluation results of the curing reactivity of the curable composition and the heat resistance of the cured product are shown in Table 3.

Table 2

| | Example 1 | Example 2 | Example 3 | Example 4 | Example 5 | Example 11 | Example 12 | Comparative Example 1 | Comparative Example 2 |
|---|---|---|---|---|---|---|---|---|---|
| Starting Material Polymer | Polymer (A) | Polymer (B) | Polymer (C) | Polymer (C) | Polymer (F) | Polymer (G) | Polymer (G) | Polymer (D) | Polymer (E) |
| Main Chain | Propylene homopolymer | 1-butene homopolymer | Propylene homopolymer | Propylene homopolymer | Propylene homopolymer | Propylene -1-butene copolymer | Propylene -1-butene copolymer | Propylene homopolymer | Propylene homopolymer |
| Meso-Pentad Fraction [mmmm] (mol%) | 1.7 | 5.5 | 7 | 7 | 2.2 | - | - | 43 | 98 |
| Meso-Diad Fraction [ml(mol%) | - | - | - | - | - | 65 | 67 | - | - |
| Molecular Weight (Mw) | 7,800 | 34,300 | 42,800 | 40,000 | 7,600 | 55, 800 | 56,800 | 31,600 | 131,000 |
| Molecular Weight Distribution (Mw/Mn) | 1.8 | 1.9 | 2.1 | 1.8 | 2.1 | 2.3 | 2.1 | 3 | 2.4 |
| Alkoxysilyl Group Concentration in All Monomers (mol%) | 0.4 | 0.2 | 0.16 | 0.84 | 0.1 | 0.14 | 0.66 | 0.04 | 0.03 |
| Number of Alkoxysilyl Groups per Molecule (/molecule) | 0.45 | 0.6 | 0.78 | 4.1 | 0.086 | 0.85 | 3.5 | 0.17 | 0.39 |
| Melt Endotherm AH-D (J/g) | 0 | 0 | 0 | 0 | 0 | 0 | 0 | 25 | 94.5 |
| Glass Transition Temperature Tg (°C) | 0 | -30 | 0 | 0 | 0 | -20 | -19 | 0 | 0 |

(continued)

| | Example 1 | Example 2 | Example 3 | Example 4 | Example 5 | Example 11 | Example 12 | Comparative Example 1 | Comparative Example 2 |
|---|---|---|---|---|---|---|---|---|---|
| Melting Point Tm (°C) | not detected | not detected | not detected | not detected | not detected | not detected | not detected | 84 | 158 |
| 2,1-bond fraction | 0 | 0 | 0 | 0 | 1.9 | 0 | 0 | 0 | 0 |
| 1,3-bond fraction and 1,4-bond fraction | 0 | 0 | 0 | 0 | 0.6 | 0 | 0 | 0 | 0 |

Table 3

| | Example 6 | Example 7 | Example 8 | Example 9 | Example 10 | Example 13 | Example 14 | Comparative Example 1 | Comparative Example 2 |
|---|---|---|---|---|---|---|---|---|---|
| Curing-Accelerating Catalyst | dibutyltin dilaurate | | | | | | | | |
| Curing Reactivity | A | A | B | B | C | B | B | D | D |
| Heat Resistance of Cured Product | A | A | A | A | B | A | A | D | D |

Industrial Applicability

The functionalized α-olefin polymer and the curable composition containing it of the present invention can be widely utilized as uses and source materials for resin compatibilizing agents, polyolefin emulsions, reactive adhesives, reactive hot-melt adhesives, other adhesives, pressure-sensitive adhesives, sealants, sealing materials, potting materials, reactive plasticizers, etc.

## Claims

**1.** A functionalized α-olefin polymer having an α-olefin polymer main chain and an alkoxysilyl group and satisfying the following (a) to (d):

(a) the meso-pentad fraction [mmmm] is less than 20 mol%, or the meso-diad fraction [m] is less than 95 mol%,
(b) the weight-average molecular weight (Mw) is from 1,000 to 500,000,
(c) the alkoxysilyl group concentration in all the monomer units is from 0.01 to 50 mol%, and
(d) the α-olefin polymer is a propylene homopolymer, a 1-butene homopolymer or a propylene-1-butene copolymer.

**2.** A curable composition containing (A) the functionalized α-olefin polymer according to claim 1 and (B) a curing-accelerating catalyst.

**3.** The curable composition according to claim 2, further containing (C) a tackifier and (D) a diluent.

**4.** A cured product produced by curing the curable composition according to claim 2 or 3.

**5.** A method for producing the cured product of claim 4, comprising curing the curable composition of claim 2 or 3 at a temperature of 100°C or lower.

**6.** The curable composition according to claim 2 or 3 for use for adhesives, sealing agents, pressure-sensitive adhesives or modifiers.

## INTERNATIONAL SEARCH REPORT

International application No. PCT/JP2013/075165

A. CLASSIFICATION OF SUBJECT MATTER
*C08F8/42*(2006.01)i, *C08F10/04*(2006.01)i, *C08L23/26*(2006.01)i, *C09J123/26*(2006.01)i, *C09K3/10*(2006.01)i

According to International Patent Classification (IPC) or to both national classification and IPC

B. FIELDS SEARCHED

Minimum documentation searched (classification system followed by classification symbols)
C08F8/00-8/50, C08F10/00-10/14, C08L23/00-23/36, C09J123/00-123/36, C09K3/00-3/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/148586 A1 (Idemitsu Kosan Co., Ltd.), 01 December 2011 (01.12.2011), claims 1 to 26; paragraphs [0001], [0012], [0091] to [0096], [0162], [0163], [0171], [0175], [0244]; examples & US 2013/0066007 A1 & EP 2578607 A1 & CN 102906125 A | 1-6 |
| X | JP 2006-348153 A (Idemitsu Kosan Co., Ltd.), 28 December 2006 (28.12.2006), claims 1 to 7; paragraphs [0001], [0008], [0016], [0054] to [0058], [0060]; examples & US 2009/0082532 A1 & EP 1892253 A1 & WO 2006/135009 A1 & DE 602006020136 D & AT 498638 T | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 October, 2013 (04.10.13) | 15 October, 2013 (15.10.13) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No. PCT/JP2013/075165

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-185084 A (Mitsubishi Chemical Corp.), 26 August 2010 (26.08.2010), entire text<br>& JP 2007-270122 A & JP 2009-287034 A<br>& US 2009/0092847 A1 & EP 1995268 A1<br>& WO 2007/105344 A1 & KR 10-2008-0106229 A<br>& CN 101384645 A | 1-6 |
| A | JP 4-306202 A (Mitsubishi Petrochemical Co., Ltd.), 29 October 1992 (29.10.1992), entire text<br>(Family: none) | 1-6 |
| A | JP 2003-511541 A (The Procter & Gamble Co.), 25 March 2003 (25.03.2003), entire text<br>& US 6863989 B1 & EP 1238035 A<br>& WO 2001/027213 A1 & AU 7846900 A<br>& BR 14609 A & CA 2386904 A<br>& AU 776090 B & CN 1378580 A<br>& MX PA02003509 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006348153 A
- JP 4306202 A
- JP 2005068423 A
- WO 2008047860 A
- WO 2008066168 A

### Non-patent literature cited in the description


- **ASAKURA et al.** *Polymer Journal,* 1984, vol. 16, 717
- **J. RANDALL et al.** *Macromol. Chem. Phys.,* 1989, vol. C29, 201
- **V. BUSICO et al.** *Macromol. Chem. Phys.,* 1997, vol. 198, 1257
- *Organometallics,* 2000, vol. 19, 1870-1878